# EUROPEAN PATENT SPECIFICATION

(11) **EP 4 261 099 B1**
(45) Date of publication and mention of the grant of the patent: **19.08.2026**
(21) Application number: 20964865.8
(22) Date of filing: 21.12.2020
(51) Int. Cl.: B61F 5/52, B61F 5/06

(54) **BOGIE BEAM, BOGIE AND RAIL VEHICLE**
DREHGESTELLTRÄGER, DREHGESTELL UND SCHIENENFAHRZEUG
BALANCIER DE BOGIE, BOGIE ET VÉHICULE FERROVIAIRE

(30) Priority: 09.12.2020 CN 202011430431
(43) Date of publication of application: 18.10.2023
(73) Proprietor: CRRC TANGSHAN CO., LTD., Fengrun District Tangshan Hebei 063035 (CN)
(72) Inventor: AN, Bo, Tangshan Hebei 063035 (CN); TIAN, Xueyan, Tangshan Hebei 063035 (CN); ZHANG, Hanchen, Tangshan Hebei 063035 (CN); ZHOU, Yaobin, Tangshan Hebei 063035 (CN); SHAO, Liyun, Tangshan Hebei 063035 (CN); ZHANG, Bolun, Tangshan Hebei 063035 (CN)
(74) Representative: dompatent
(86) International application number: PCT/CN2020/137986
(87) International publication number: WO 2022/120933

(56) References cited:
- CN-A- 101 565 051
- CN-A- 105 882 674
- CN-A- 105 905 126
- CN-A- 107 554 546
- CN-A- 107 585 174
- CN-A- 108 556 866
- CN-A- 110 753 651
- CN-A- 112 046 538
- CN-A- 112 519 818
- CN-A- 112 519 820
- CN-A- 112 519 823
- JP-A- 2015 009 571
- JP-A- 2016 203 865
- US-A1- 2014 137 765

## Description

### TECHNICAL FIELD

The present disclosure relates to railway vehicle operation technology, more particularly to a crossbeam of a bogie frame, a bogie frame, and a railway vehicle.

### BACKGROUND

Railway vehicle is an important transportation connecting cities and has gradually become the main transportation in cities. Railway vehicle is also the main carrier for cargo transportation. The railway vehicle mainly includes a car body and a bogie frame disposed below the car body. The bogie frame is employed to carry the load on the car body and realize running and steering functions.

The bogie frame includes a frame, a wheelset, a traction device, a buffer device and other structures, in which the frame includes two sidebeams extended along the longitudinal direction of the vehicle and a crossbeam connecting the two sidebeams, and the connection between the crossbeam and the sidebeam can have varies types. After studying various types of bogie frames, technicians find that there are some technical defects in conventional bogie frames, such as large dead weight, which leads to large wheelset force, large wheel-rail wear, and large noise. The rigid connection of the frame leads to poor vibration reduction ability, which leads to large vibration and poor riding comfort. The wheel unloading rate is large, and the vehicle has a large derailment risk when passing through the concave rail, thereby low safety. Poor anti-rollover ability makes the carriage prone to rollover, insufficient vertical buffering ability leads to poor vibration of the carriage, and poor riding comfort, high dead weight leads to low traction efficiency, and unreasonable installation layout of components leads to low assembly efficiency. US 2014/137765 A1 discloses a railcar bogie including: a cross beam supporting a carbody; a pair of front and rear axles sandwiching and arranged in front of and behind the cross beam in a railcar longitudinal direction to extend in a railcar width direction; bearings provided at both railcar width direction sides of each and rotatably supporting the axles; axle boxes accommodating the bearings; side members extending in the railcar longitudinal direction supporting both railcar width direction end portions of the cross beam and each including both railcar longitudinal direction end portions supported by the axle boxes; contact members provided at both railcar width direction end portions and disposed on railcar longitudinal direction middle portions of the side members so as not to be fixed to the side members in an upper-lower direction; and supporting members provided at the axle boxes and supporting the railcar longitudinal direction end portions of the side members.

### SUMMARY

The embodiment of the present disclosure provides a crossbeam for a bogie frame according to claim 1, a bogie frame according to claim 11 and a railway vehicle according to claim 12.

A first aspect of an embodiment of the present disclosure provides a crossbeam of the bogie frame, and the crossbeam includes two crossbeam single-structures.

The crossbeam single-structure includes:
a crossbeam main body, of which the inner end surface facing another crossbeam single-structure having a first mounting area and a second mounting area, wherein the middle top surface of the crossbeam main body is provided with a sidebeam mounting interface for assembling with the sidebeam of the bogie frame;
a crossbeam connecting arm extended in a direction parallel to the crossbeam main body, one end of which fixed to the first mounting area in the crossbeam main body, and the other end of which connected to the second mounting area of the crossbeam main body in another crossbeam single-structure through a crossbeam connecting device.

A second aspect of the embodiment of the present disclosure provides a bogie frame including a crossbeam as described above.

A third aspect of an embodiment of the present disclosure provides a railway vehicle including a bogie frame as described above.

According to the technical proposal provided by the embodiment of the present disclosure, two crossbeam single-structures are connected to form the crossbeam of the bogie frame, wherein the crossbeam single-structure includes a crossbeam main body and a crossbeam connecting arm, and the inner end surface of the crossbeam main body facing another crossbeam single-structure is provided with a first mounting area and a second mounting area. The middle top surface of the crossbeam main body is employed for assembling with the sidebeam of the bogie frame. The crossbeam connecting arm is extended in a direction parallel to the crossbeam main body, one end of which is fixed to the first mounting area in the crossbeam main body, and the other end of which is connected to the second mounting area of the crossbeam main body in another crossbeam single-structure through the crossbeam connecting device. The structure of the crossbeam provided by the embodiment is different from that of the crossbeam in any conventional bogie frame, and the assembly mode between the crossbeam and the sidebeam is also different from the conventional mode. Moreover, the crossbeam provided by the embodiment is small in size, easy to produce, transport, and assemble, and can improve assembly efficiency.

### BRIEF DESCRIPTION OF THE DRAWINGS

The drawings illustrated herein serve to provide a further understanding of and constitute a portion of this present disclosure, and the illustrative embodiments of this present disclosure and the description thereof are used to explain this present disclosure and are not unduly limiting. In the drawings:
Fig. 1 is a perspective view of a crossbeam provided by an embodiment of the present disclosure.
Fig. 2 is a perspective view of the crossbeam single-structure provided by the embodiment of the present disclosure.
Fig. 3 is a sectional view of the crossbeam provided by the embodiment of the present disclosure.
Fig. 4 is a partially enlarged view of area A in Fig. 3.
Fig. 5 is an exploded view of two connected crossbeam single-structures provided by the embodiment of the present disclosure.
Fig. 6 is a perspective view of the sidebeam provided by the embodiment of the present disclosure.
Fig. 7 is a front view of the sidebeam provided by the embodiment of the present disclosure.
Fig. 8 is another front view of the sidebeam provided by the embodiment of the present disclosure.
Fig. 9 is a schematic view of the sidebeam provided by the embodiment bearing a first vertical load.
Fig. 10 is a schematic view of the sidebeam provided by the embodiment bearing a second vertical load.
Fig. 11 is a structural schematic view of the crossbeam, the sidebeam, and a secondary suspension mounting seat of the bogie frame provided by the embodiment of the present disclosure.
Fig. 12 is an exploded view of the crossbeam, the sidebeam, and the secondary suspension mounting seat of the bogie frame provided by the embodiment of the present disclosure.
Fig. 13 is a top perspective view of the secondary suspension mounting seat provided by the embodiment of the present disclosure.
Fig. 14 is a bottom perspective view of the secondary suspension mounting seat provided by the embodiment of the present disclosure.
Fig. 15 is a partial sectional view of the assembly of the secondary suspension mounting seat, the sidebeam, and the crossbeam provided by the embodiment of the present disclosure.
Fig. 16 is a structural schematic view of the bogie frame with the secondary suspension mounting seat disposed thereon provided by the embodiment of the present disclosure.
Fig. 17 is a structural schematic view of the secondary suspension mounting seat provided by the embodiment of the present disclosure, which is connected to the traction motor through the motor balancing link.
Fig. 18 is a structural schematic view of the non-power bogie frame provided by the embodiment of the present disclosure.
Fig. 19 is a structural schematic view of a wheelset of the bogie frame provided by the embodiment of the present disclosure.
Fig. 20 is a partial schematic view of the bogie frame with a safety stopper device provided with the embodiment of the present disclosure.
Fig. 21 is a sectional view of the bogie frame with the safety stopper device provided by the embodiment of the present disclosure.
Fig. 22 is a structural schematic view of the safety stopper device provided by the embodiment of the present disclosure.
Fig. 23 is an exploded view of the assembly of the safety stopper, the primary suspension, and the shaft box provided by the embodiment of the present disclosure.
Fig. 24 is a perspective view of a brake hanging bracket of the bogie frame provided by the embodiment of the present disclosure.
Fig. 25 is a schematic view of the connection between the brake hanging bracket and the crossbeam provided by the embodiment of the present disclosure.
Fig. 26 is an exploded view of the connection between the brake hanging bracket and the crossbeam provided by the embodiment of the present disclosure.
Fig. 27 is a sectional view of the brake hanging bracket and the crossbeam provided by the embodiment of the present disclosure.
Fig. 28 is a perspective schematic view of the connection between the crossbeam and the vertical vibration damper provided by the embodiment of the present disclosure.
Fig. 29 is an enlarged schematic view of area B in Fig. 28.
Fig. 30 is an exploded schematic view of the connection between the crossbeam and the vertical vibration damper provided by the embodiment of the present disclosure.
Fig. 31 is a schematic view of the arranged position of the vertical vibration damper of the bogie frame provided by the embodiment of the present disclosure.
Fig. 32 is a perspective view of the powered bogie frame provided by the embodiment of the present disclosure.
Fig. 33 is a perspective view of an anti-roll torsion bar provided by the embodiment of the present disclosure.
Fig. 34 is a structural schematic view of the crossbeam connected to the shaft box through a tension-only rod provided by the embodiment of the present disclosure.
Fig. 35 is a perspective schematic view of the connection of the traction center pin, the longitudinal stopper, and the crossbeam provided by the embodiment of the present disclosure.
Fig. 36 is a sectional view of the connection of the traction center pin, the longitudinal stopper, and the crossbeam provided by the embodiment of the present disclosure.
Fig. 37 is a perspective view of the connection between the traction center pin and the longitudinal stopper provided by the embodiment of the present disclosure.
Fig. 38 is a structural schematic view of the traction center pin provided by the embodiment of the present disclosure.
Fig. 39 is an exploded schematic view of a traction center pin provided by an embodiment of the present disclosure.
Fig. 40 is a perspective view of the connection between the traction center pin and the crossbeam provided by the embodiment of the present disclosure.
Fig. 41 is a perspective view of the connection between the traction center pin and the transverse vibration damper provided by the embodiment of the present disclosure.
Fig. 42 is a front view of the connection between the traction center pin and the transverse vibration damper provided by the embodiment of the present disclosure.
Fig. 43 is an enlarged view of area C in Fig. 36.
Fig. 44 is a sectional view of the connection between the traction center pin and the transverse vibration damper provided by the embodiment of the present disclosure.
Fig. 45 is an enlarged view of area D in Fig. 44.

### REFERENCES IN THE DRAWINGS:

1-sidebeam; 11-main sidebeam plate; 111-main plate middle section; 112-main plate transition section; 113-main plate connection section; 12-auxiliary sidebeam plate; 121-auxiliary plate middle section; 122-auxiliary plate transition section; 123-auxiliary plate connection section; 13-elastic stopper; 14-buffer gap; 15-first sidebeam positioning pin; 16-second sidebeam positioning pin; 17-third sidebeam positioning pin; 18-positioning metal member;
2-crossbeam single-structure; 21-crossbeam main body; 210-first pin hole; 211-sidebeam positioning pin hole; 212-secondary mounting platform; 2121-secondary bolt hole; 2122-secondary positioning hole; 213-brake bolt hole; 214-vertical vibration damper mounting lug; 215-anti-roll torsion bar mounting portion; 216-anti-yaw damper mounting plate; 217-tension-only rod connecting portion; 218-center pin connecting portion; 219-nameplate mounting portion; 22-crossbeam connecting arm; 23-crossbeam connecting pin; 24-crossbeam connecting flange; 25-crossbeam connecting joint; 26-crossbeam connecting gasket; 27-crossbeam mounting ring; 28-crossbeam connecting bolt; 29-mounting lug; 291-limiting surface;
3-wheelset; 31-shaft; 32-wheel; 33-shaft box; 331-primary positioning hole; 332-limiting recess;
4-primary suspension device; 41-primary suspension mounting seat; 411-lower mounting seat; 412-upper mounting seat; 42-primary suspension; 43-wheelset lift; 431-limiting stopper protrusion; 432-connecting arm; 441-lower pad plate; 442-upper pad plate;
5-safety stopper device; 51-safety stopper seat; 52-safety stopper;
6-traction center pin; 61-center pin main body; 61a-stopper contact area; 61b-mating hole; 62-mounting arm; 63-limiting surface; 64-lift; 641-lift mounting main body; 642-lift stopper block; 643-second adjusting gasket; 65-longitudinal stopper; 651-first adjusting gasket; 652-stopper main body; 653-mounting flange; 654-stopper fixing bolt;
7-brake hanging bracket; 71-brake crossbeam connecting hole; 72-brake crossbeam connecting bolt; 73-brake hanging bracket liner; 74-brake device mounting hole; 75-chamber mounting hole;
8-secondary suspension mounting seat; 81-mounting seat top plate; 82-mounting seat side plate; 83-mounting seat connecting portion; 84-mounting seat bolt hole; 85-mounting seat positioning protrusion; 86-sidebeam positioning counterbore; 871-lower transition plate; 872-upper transition plate; 88-secondary mounting portion; 89-motor mounting portion; 810-air spring;
91-traction motor; 92-motor balancing link; 93-vertical vibration damper; 94-first fixing bolt; 941-first bolt head; 942-first side plane; 943-first screw; 944-first adjusting gasket; 945-first nut; 95-anti-roll torsion bar; 951-transverse torsion bar; 952-vertical torsion bar; 953-torsion bar joint; 954-torsion bar mounting member; 96-anti-yaw damper; 97-tension-only rod; 971-rod joint; 98-transverse vibration damper; 99-second fixing bolt; 991-second bolt head; 992-second transverse plane; 993-second screw; 994-third adjusting gasket; 995-second nut.

### DETAILED DESCRIPTION OF THE EMBODIMENTS

In order to clarify the technical solutions and advantages of the embodiments of the present disclosure, the following further detailed description of the exemplary embodiments of the present disclosure is given in conjunction with the accompanying drawings, and it is apparent that the described embodiments are only a portion of the embodiments of the present disclosure, and are not exhaustive of all embodiments. It should be noted that the embodiments in the present disclosure and the features in the embodiments can be combined with each other without conflict.

The embodiment provides a crossbeam which can be adapted for a bogie frame for a railway vehicle, which can be a diesel locomotive or an electric locomotive, an EMU train, a subway, a light rail or a tram, etc., and can be a passenger vehicle or a freight vehicle.

The bogie frame includes a sidebeam, a wheelset, a traction device, a suspension device, and other components besides the crossbeam.

In the embodiment, a horizontal direction identical to the travel direction of the vehicle is defined as a longitudinal direction, a horizontal direction perpendicular to the longitudinal direction is defined as a transverse direction, and a direction perpendicular to the horizontal direction is defined as a vertical direction or an upright direction. The crossbeam is extended transversely in the bogie frame.

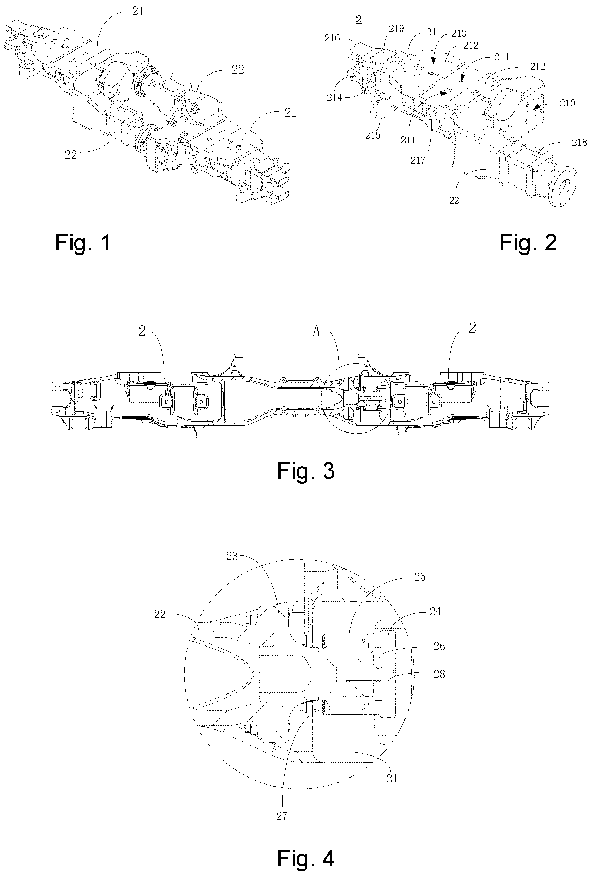

Fig. 1 is a perspective view of the crossbeam provided by the embodiment of the present disclosure, and Fig. 2 is a perspective view of the crossbeam single-structure provided by the embodiment of the present disclosure. As shown in Figs. 1 and 2, the present embodiment provides the crossbeam of the bogie frame, which includes two crossbeam single-structures 2, which are disposed sequentially in the transverse direction and connected to each other to form the crossbeam.

The crossbeam single-structure 2 includes a crossbeam main body 21 and a crossbeam connecting arm 22 both of which extended in the transverse direction. An inner end surface of the crossbeam main body 21 facing the other crossbeam main body 21 has a first mounting area and a second mounting area. One end of the crossbeam connecting arm 22 is fixed to the first mounting area and the other end is connected to the second mounting area in the other crossbeam single-structure 2 by a crossbeam connecting device.

The crossbeam main body 21 is assembled with the sidebeams to form a frame of the bogie frame and serves as a main body member of the bogie frame. Specifically, a sidebeam mounting interface for assembling the sidebeam is provided on the middle top surface of the crossbeam main body 21, and the sidebeam is located above the crossbeam main body 21.

The technical proposal provided by the embodiment of the present disclosure, two crossbeam single-structures are connected to form the crossbeam of the bogie frame, wherein the crossbeam single-structure includes a crossbeam main body and a crossbeam connecting arm, and the inner end surface of the crossbeam main body facing another crossbeam single-structure is provided with a first mounting area and a second mounting area. The middle top surface of the crossbeam main body is employed for assembling with the sidebeam of the bogie frame. The crossbeam connecting arm is extended in a direction parallel to the crossbeam main body, one end of which is fixed to the first mounting area in the crossbeam main body, and the other end of which is connected to the second mounting area of the crossbeam main body in another crossbeam single-structure through the crossbeam connecting device. The structure of the crossbeam provided by the embodiment is different from that of the crossbeam in any conventional bogie frame, and the assembly mode between the crossbeam and the sidebeam is also different from the conventional mode. Moreover, the crossbeam provided by the embodiment is small in size, easy to produce, transport, and assemble, and can improve the assembly efficiency.

On the basis of the above technical proposal, the embodiment provides a specific implementation mode of the crossbeam:

The crossbeam is made of cast aluminum alloy or other lightweight materials, and the casting mold can be made by additive manufacturing technology to reduce the weight.

As shown in Fig. 2, the width of the end portion of the crossbeam main body 21 facing the other crossbeam single-structure 2 is larger than the width of the middle portion of the crossbeam main body 21. The end surface of the crossbeam main body 21 facing the other crossbeam single-structure 2 is defined as an inner end surface, and the first mounting area and the second mounting area are respectively located on the inner end surface of the crossbeam main body 21, specifically arranged at two ends along the width direction of the inner end surface.

The distance between the first mounting area and the second mounting area is remained, so that there is a gap between the two crossbeam connecting arms 22 for receiving a traction center pin of the bogie frame traction device. The top of the traction center pin is connected to the car body, and the bottom of the traction center pin is inserted into the gap between the two crossbeam connecting arms 22 to transmit traction or braking force with the crossbeam.

For the connection between the two crossbeam single-structures 2, a rigid connection can be employed, for example by bolting the crossbeam connecting arm 22 to the other crossbeam main body 21. Or the following mode provided by the embodiment can be adopted:

In an implementation mode: a crossbeam connecting pin is adopted, and two ends along the axial direction of the crossbeam connecting pin are respectively defined as a first end and a second end. The first end is connected to the crossbeam connecting arm 22, and the second end is inserted and fixed in the first pin hole opened in the second mounting area. The first end of the crossbeam connecting pin and the crossbeam connecting arm 22 can be bolted, welded, pressed, and installed, and the second end fixed in the second pin hole can be welded, pressed, and installed or bolted through gaskets.

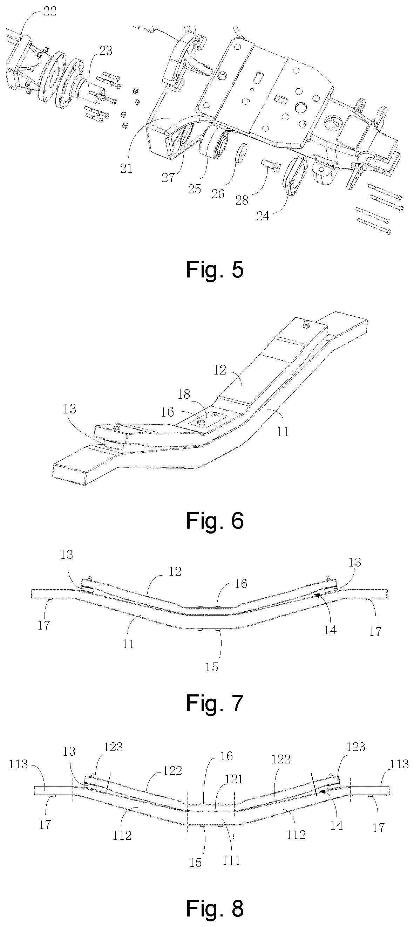

Another implementation mode: Fig. 3 is a sectional view of the crossbeam provided by the embodiment of the present disclosure, Fig. 4 is a partially enlarged view of the area A in Fig. 3, and Fig. 5 is an exploded view of the two crossbeams connected by the embodiment of the present disclosure. As shown in Figs. 3 to 5, the crossbeam connecting device includes a crossbeam connecting pin 23, a crossbeam connecting flange 24, a crossbeam connecting joint 25, and a crossbeam connecting gasket 26.

The crossbeam connecting joint 25 has an annular structure, is press-fitted in the first pin hole 210, and is relatively fixed to the crossbeam main body 21. In Fig. 4, the axial direction of the crossbeam connecting joint 25 is extended in the left-right direction, the left end thereof is defined as a first end and the right end as a second end.

The second end of the crossbeam connecting pin 23 is press-fitted in the crossbeam connecting joint 25 and is relatively fixed to the crossbeam connecting joint 25. The crossbeam connecting gasket 26 is provided at the second end surface of the crossbeam connecting pin 23 and is coaxial with the crossbeam connecting pin 23. The outer diameter of the crossbeam connecting gasket 26 is larger than the inner diameter of the crossbeam connecting joint 25, and the inner diameter of the crossbeam connecting gasket 26 is smaller than the outer diameter of the crossbeam connecting pin 23. The second end of the crossbeam connecting pin 23 is provided with an internal threaded hole. After passing through the crossbeam connecting gasket 26 from the right side, the crossbeam connecting bolt 28 is screwed into and fixed to the internal threaded hole of the crossbeam connecting pin 23, thereby achieving a fixed connection between the crossbeam connecting pin 23 and the crossbeam connecting joint 25.

The crossbeam connecting flange 24 has a mounting outer ring and an inner ring, the inner ring is inserted into the first pin hole 210 and abuts against the axial second end of the crossbeam connecting joint 25, and the outer ring of the crossbeam connecting flange 24 is connected to the crossbeam main body 21 by bolts, thereby achieving a fixed connection between the crossbeam connecting joint 25 and the crossbeam main body 21.

Further, the crossbeam connecting device further includes at least one beam mounting ring 27 disposed in the first pin hole 210 and between the left end of the crossbeam connecting joint 25 and the crossbeam main body 21. In the assembly process, the crossbeam connecting pin 23 sequentially passes through at least one beam mounting ring 24, the crossbeam connecting joint 25 and the crossbeam connecting gasket 26 from the left side and is fixed to the crossbeam connecting bolt 28. The crossbeam mounting ring 27 adjusts the dimensional deviation between the crossbeam connecting joint 25 and the crossbeam main body 21. The number and thickness of the crossbeam mounting ring 27 can be designed according to the specific dimensional deviation, so that the crossbeam connecting joint 25 can be fixed in the crossbeam main body 21 to avoid relative movement and vibration of the crossbeam main body 21 during the operation of the vehicle.

The first end of the crossbeam connecting pin 23 is inserted in the second pin hole provided on the end surface of the crossbeam connecting arm 22, and the outer circumferential surface of the crossbeam connecting pin 23 is extended outward in the radial direction to form a mounting flange which is connected to the flange provided at the end of the crossbeam connecting arm 22 by bolts. The radial force between the crossbeam connecting pin 23 and the crossbeam connecting arm 22 is received by the end of the crossbeam connecting arm 22 inserted into the second pin hole, so that the bolt connected to the crossbeam connecting arm 22 is prevented from receiving shear force.

The assembly process of the crossbeam connecting device for connecting the crossbeam single-structure includes the following steps: firstly, the first end of the crossbeam connecting pin 23 is bolted to the crossbeam connecting arm 22, and then the crossbeam connecting pin 23 is connected to the crossbeam main body 21. The process of connecting the crossbeam connecting pin 23 to the crossbeam main body 21 is to insert the crossbeam mounting ring 27 into the first pin hole 210 of the crossbeam main body 21 according to the measured dimensional deviation, press-fit the crossbeam connecting joint 25, press-fit the crossbeam connecting pin 23 into the crossbeam connecting joint 25, place the crossbeam connecting gasket 26, place the crossbeam connecting bolt 28 through the crossbeam connecting gasket 26 and screw the crossbeam connecting pin 23 to fix, and finally, abut the crossbeam connecting flange 24 at the right end of the crossbeam connecting joint 25 and fix the crossbeam main body 21 by bolts.

The axial force, radial force, torsional force, and deflection deformation between the two crossbeam single-structures 2 are all borne by the crossbeam connecting joints.

Further, the crossbeam connecting joint 25 includes a metal shell, a metal inner ring, and a rubber block arranged therebetween. The rubber block is vulcanized with the metal shell and the metal inner ring to form an integrated structure, so that the crossbeam connecting joint 25 has a certain deformation ability. With the crossbeam connecting joint 25 provided in the present embodiment, deflection of a certain angle can be generated between two crossbeam single-structures. For example, in a case where there is a pit under one side of the track and the bogie frame passes through this position, the wheels on two sides are restrained greatly by the conventional rigid crossbeam, which leads to the suspension of the wheels above the pit and easy derailment under the condition of lateral force. However, the flexible deflection is generated between the two crossbeam single-structures through the crossbeam connecting joint 25, so that the wheels above the pit are still attached to the track, and the driving safety is improved. Compared with the conventional rigid crossbeam, the crossbeam provided by the embodiment is applied to the bogie frame, and has better adaptability to complex and harsh lines, higher riding comfort, and higher safety.

The crossbeam of a conventional bogie frame is welded. There are many factors influencing the welding quality, such as ambient temperature, welding flux composition, welding temperature, etc. Poor welding quality will reduce the reliability of the bogie frame. In the embodiment, the bolt connection mode is adopted between the two crossbeam single-structures, so that the reliability is higher.

On the basis of the above technical proposal, the crossbeam single-structure 2 further provides a connecting interface of a plurality of components, thus improving the integration.

For example, the middle top surface of the crossbeam main body 21 is provided with an interface for assembling with the sidebeam, and the sidebeam is provided above the crossbeam main body 21. Specifically, a sidebeam positioning pin hole 211 is provided on the middle top surface of the crossbeam main body 21 for passing through the positioning pin provided at the bottom of the sidebeam to restrict the horizontal movement of the sidebeam.

Further, the number of sidebeam positioning pin holes 211 is two disposed sequentially in the longitudinal direction. One of the sidebeam positioning pin holes 211 is a circular hole and the other is an oblong circular hole extended longitudinally in the longitudinal direction. Correspondingly, two positioning pins are disposed at the bottom of the sidebeam, which are inserted into the circular hole and the oblong hole respectively. In the production process, due to the existence of measuring tools, measuring methods, production equipment, and other factors, the distance between the two positioning pins at the bottom of the sidebeam will have an actual deviation within the allowable range. If it cannot be assembled with the crossbeam due to actual deviation, the production takt time will be affected, and then the production progress will be delayed. However, the matching mode of the circular hole and the oblong hole can adapt to the actual deviation between the two positioning pins, complete the assembly of the sidebeam and the crossbeam normally, and improve production efficiency.

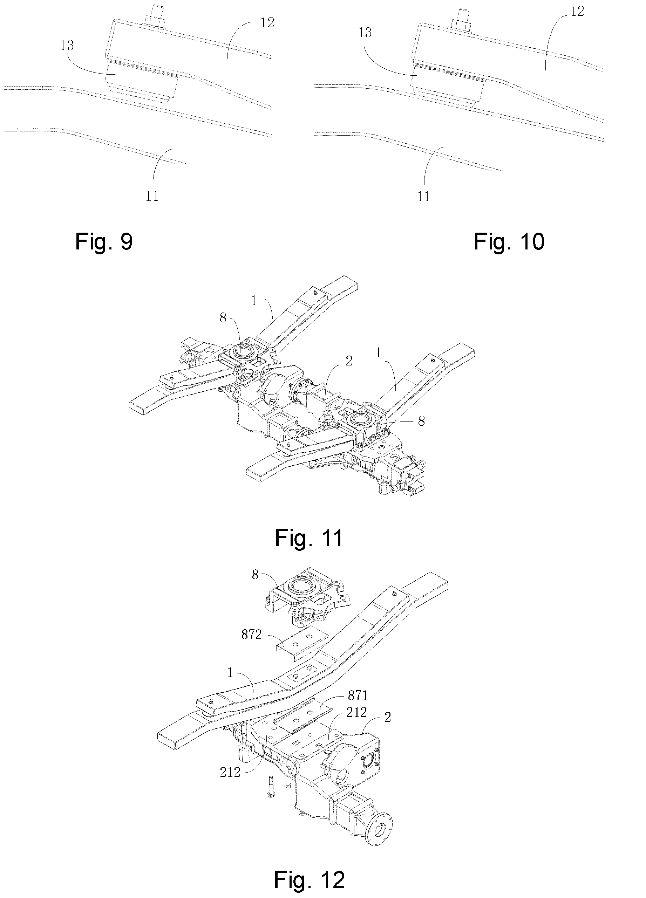

Fig. 6 is a perspective view of the sidebeam provided by the embodiment of the present disclosure, Fig. 7 is a front view of the sidebeam provided by the embodiment of the present disclosure, Fig. 8 is another front view of the sidebeam provided by the embodiment of the present disclosure, Fig. 9 is a schematic view of the sidebeam provided by the present embodiment bearing a first vertical load, and Fig. 10 is a schematic view of the sidebeam provided by the present embodiment bearing a second vertical load.

As shown in Figs. 6 to 10, the sidebeam 1 of the bogie frame provided by the embodiment is a double-layer sidebeam, including a main sidebeam plate 11, an auxiliary sidebeam plate 12, and an elastic stopper 13. The main sidebeam plate 11 and the auxiliary sidebeam plate 12 are made of elastic composite fiber material, which has the advantages of light weight, elastic deformation, and the like.

The main sidebeam plate 11 and the auxiliary sidebeam plate 12 are stacked, and are symmetrical laterally as shown in Fig. 7. The auxiliary sidebeam plate 12 is stacked above the main sidebeam plate 11. The middle bottom surface of the auxiliary sidebeam plate 12 is in contact with the top surface of the main sidebeam plate 11. Two ends of the auxiliary sidebeam plate 12 are suspended, i.e. there is a buffer gap 14 between the bottom surfaces of two ends of the auxiliary sidebeam plate 12 and the top surface of the main sidebeam plate 11.

An elastic stopper 13 is provided at the end of the auxiliary sidebeam plate 12 and is located in the buffer gap 14. In a case where the sidebeam 1 is not subjected to a vertical load, there is a certain gap between the elastic stopper 13 and the upper surface of the main sidebeam plate 11. In a case where the middle portion of the sidebeam is subjected to the first vertical load, the main sidebeam plate 11 is slightly elastically deformed, and there is a gap between the elastic stopper 13 and the top surface of the main sidebeam plate 11, as shown in Fig. 9. In a case where the middle portion of the sidebeam is subjected to a greater second vertical load, the main sidebeam plate 11 and the auxiliary sidebeam plate 12 have greater elastic deformation, and the middle portions of the main sidebeam plate 11 and the auxiliary sidebeam plate 12 are pressed and moved downward, and two ends move upward and inward until the elastic stopper 13 is in contact with the top surface of the main sidebeam plate 11, as shown in Fig. 10.

In a case where the vehicle is empty or full, the vehicle load is small, and the elastic stopper 13 is not in contact with the main sidebeam plate 11, as shown in Fig. 9. Only the main sidebeam plate 11 is bearing with the vertical force and transmits to the primary suspension device 4, only the main sidebeam plate 11 has elastic deformation, and the auxiliary sidebeam plate 12 does not bear the force and does not provide support stiffness.

In a case where the vehicle is overloaded and the vehicle load is large, the auxiliary sidebeam plate 12 moves down, and the elastic stopper 13 is in contact with the main sidebeam plate 11, as shown in Fig. 10. At this time, the load of the vehicle is borne by the main sidebeam plate 11 and the auxiliary sidebeam plate 12 at the same time and provides vertical stiffness, which ensures that the support stiffness provided by the bogie frame increases with the increase of the load of the vehicle, so that the vibration amplitude of the carriage is in a small range under different load conditions, and the riding comfort is improved.

On the basis of the above technical solution, the embodiment provides an embodiment of the sidebeam:

As shown in Fig. 8, the main sidebeam plate 11 includes a main plate middle section 111, a main plate transition section 112, and a main plate connection section 113. The main plate transition section 112 and the main plate connection section 113 are extended from two ends of the main plate middle section 111 respectively. The main plate connection section 113 is located at the end of the main sidebeam plate 11.

The height of the main plate middle section 111 is lower than the height of the main plate connection section 113, and the main plate transition section 112 is connected between the main plate middle section 111 and the main plate connection section 113. The main plate transition section 112 has an oblique upward shape from the middle to the end of the main sidebeam plate 111. The main plate connection section 113 is adapted to connect to the primary suspension device.

The thickness of the main plate middle section 111 is larger than the thickness of the main plate connection section 113, thereby increasing the support strength of the main plate middle section 111. The thickness of the main plate transition section 112 gradually decreases in the direction from the main plate middle section 111 to the main plate connection section 113.

In a specific mode, the thickness of the main plate middle section 111 is uniform and is extended in the horizontal direction. The thickness of the main plate connection section 113 is uniform and is extended in the horizontal direction. The main plate transition section 112 is extended obliquely upward and has thickness gradually decreased in the direction from the main plate middle section 111 to the main plate connection section 113.

As shown in Fig. 8, the auxiliary sidebeam plate 12 includes an auxiliary plate middle section 121 an auxiliary plate transition section 122, and an auxiliary plate connection section 123. The auxiliary plate transition section 122 and the auxiliary plate connection section 123 respectively are extended from two ends of the auxiliary plate middle section 121.

The height of the auxiliary plate middle section 121 is lower than the height of the auxiliary plate connection section 123, and the auxiliary plate transition section 122 is connected between the auxiliary plate middle section 121 and the auxiliary plate connection section 123. In a specific mode, the thickness of the auxiliary plate middle section 121 is uniform and is extended in the horizontal direction. The thickness of the auxiliary plate transition section 122 can be uniformly provided or not uniformly provided and can be extended obliquely upward.

The auxiliary plate connection section 123 is located at the end of the auxiliary plate transition section 122 and is extended in the same direction as the auxiliary plate transition section 122. The vertical projection of the auxiliary board connection section 123 is on the main plate transition section 122, and the buffer gap 14 is formed between the auxiliary board connection section 123, the auxiliary board transition section 122, and the main plate transition section 112.

The elastic stopper 13 is provided at the auxiliary plate connection section 123, and in a case where the load on the sidebeam 1 is large, the elastic stopper 13 is in contact with the main plate transition section 112.

The elastic stopper 13 is a structure with a certain stiffness and a certain elastic buffer capacity. Specifically, the embodiment provides an elastic stopper 13 including a stopper block and a stopper connector. The stopper block includes a metal shell and a rubber block disposed inside the metal shell, and the rubber block and the metal shell form an integrated structure through the vulcanization process. One end of the stopper connector is connected to the metal shell, and the other end is connected to the auxiliary sidebeam plate 12.

In the bogie frame provided by the embodiment, the sidebeam 1 is disposed above the crossbeam 2. The bottom surface of the main plate middle section 111 is provided with a first sidebeam positioning pin 15 for positioning with the crossbeam 2, and the first sidebeam positioning pin 15 is extended in a direction perpendicular to the main plate middle section 111. In the assembly process, the positioning between the crossbeam 2 and the sidebeam 1 is realized by inserting the first sidebeam positioning pin 15 into the sidebeam positioning pin hole 211, so that there is no relative movement between the crossbeam and the sidebeam in the horizontal direction.

Both the main sidebeam plate 11 and the auxiliary sidebeam plate 12 are made of an elastic composite fiber material, which can be, for example, a carbon fiber composite material, a glass fiber composite material, or a carbon fiber and a glass fiber composite material. On the basis of the above materials, other composite materials can also be added.

In a specific mode, the number of the first side member positioning pins 15 is two, and the first sidebeam positioning pins 15 are disposed on intervals along the longitudinal direction of the main sidebeam plate 11. The first sidebeam positioning pin 15 can be made of metal or a material having higher hardness. In a case where the first sidebeam positioning pin 15 is made of metal and the main sidebeam plate 11 is made of carbon fiber composite material, a metal member is pre-embedded in the bottom of the main sidebeam plate 11, the outer end of the metal member exposes the main sidebeam plate 11 and forms a flat plate structure, and the first sidebeam positioning pin 15 is fixed to the flat plate structure.

In addition, a second sidebeam positioning pin 16 is provided on the middle top surface of the auxiliary sidebeam plate 12 for positioning with the secondary suspension device of the bogie frame. The second sidebeam positioning pin 16 is extended in a direction perpendicular to the middle top surface of the auxiliary sidebeam plate 12. The number of the second sidebeam positioning pins 16 is two, and the second sidebeam positioning pins 16 are disposed on intervals along the longitudinal direction of the auxiliary sidebeam plate 12. The second sidebeam positioning pin 16 can be made of metal or a material having higher hardness. In a case where the second sidebeam positioning pin 16 is made of metal and the auxiliary sidebeam plate 12 is made of carbon fiber composite material, a positioning metal member 18 is pre-embedded in the bottom of the auxiliary sidebeam plate 12, the outer end of the positioning metal member 18 exposes the upper surface of the auxiliary sidebeam plate 12 and forms a flat plate structure, and the second sidebeam positioning pin 16 is fixed to the flat plate structure.

Further, the bottom surfaces of two ends of the main sidebeam plate 11 are provided with third sidebeam positioning pins 17 for positioning with the primary suspension device of the bogie frame. The third sidebeam positioning pins 17 are extended in a direction perpendicular to the bottom surface of the end of the main sidebeam plate 11. One of the third sidebeam positioning pin 17 is provided at each end of the main sidebeam plate 11. The third sidebeam positioning pin 17 can be made of metal or a material with higher hardness. In a case where the third sidebeam positioning pin 17 is made of metal and the main sidebeam plate 11 is made of carbon fiber composite material, a metal member can also be pre-embedded in the main sidebeam plate 11 with reference to the above method, and the portion of the metal member exposed from the bottom surface of the main sidebeam plate 11 is connected to the third sidebeam positioning pin 17.

Further, two secondary mounting platforms 212 protruded from the top surface of the crossbeam main body 21 are provided on the top surface of the crossbeam main body 21. A recessed area formed between the two secondary mounting platforms 212 can receive the sidebeam 1, and a sidebeam positioning pin hole 211 is provided in the recessed area.

Further, two secondary suspension mounting seats 8 are provided, which are respectively covered over the sidebeam 1 and connected to the crossbeam 2. A mounting channel penetrating in the longitudinal direction is formed between the secondary suspension mounting seat 8 and the crossbeam 2, the sidebeam 1 is penetrated in the mounting channel, and the middle portion of the sidebeam 1 is located in the mounting channel. The sidebeam 1 and the crossbeam 2 are two independent structures. In the assembly process, the sidebeam is first placed at the installation position of the crossbeam 2, and then the secondary suspension mounting seat 8 is covered on the sidebeam 1 and assembled with the crossbeam 2.

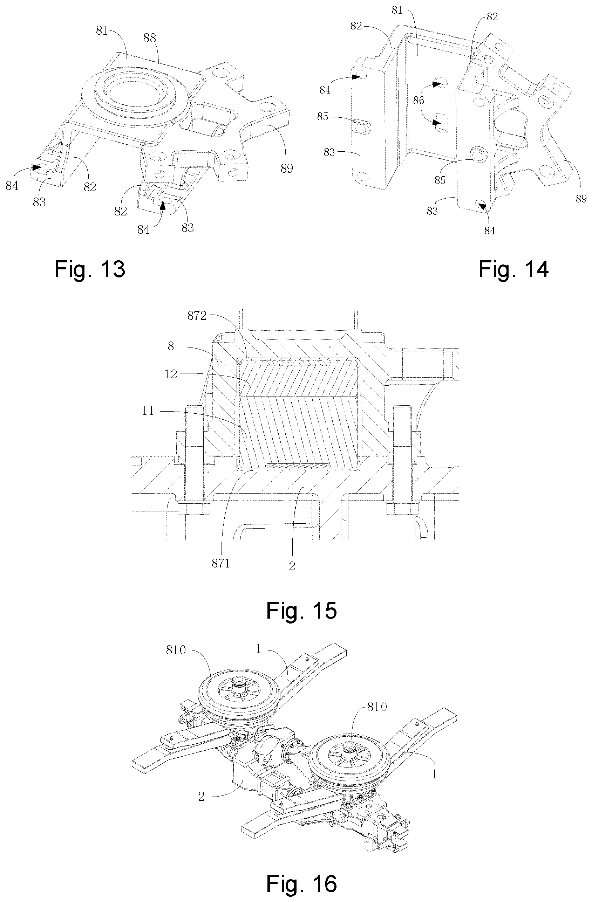

Specifically, Fig. 11 is a structural schematic view of the crossbeam, the sidebeam, and the secondary suspension mounting seat of the bogie frame provided by the embodiment of the present disclosure, Fig. 12 is an explosive view of the crossbeam, the sidebeam, and the secondary suspension mounting seat of the bogie frame provided by the embodiment of the present disclosure, Fig. 13 is a top view of the secondary suspension mounting seat provided by the embodiment of the present disclosure, Fig. 14 is a bottom view of the secondary suspension mounting seat provided by the embodiment of the present disclosure, and Fig. 15 is a partial sectional view of the assembly of the secondary suspension mounting seat, the sidebeam and the crossbeam provided by the embodiment of the present disclosure.

As shown in Figs. 11 to 15, the secondary suspension mounting seat 8 includes a mounting seat top plate 81 and a mounting seat side plate 82. The mounting seat top plate 81 is extended in the transverse direction and the top surface thereof to mount the secondary suspension device. The mounting seat side plate 82 is provided vertically and parallel to the longitudinal direction, and the number of the mounting seat side plates 82 is two. The top ends of the two mounting seat side plates 82 are respectively connected to two opposite edges of the mounting seat top plate 81. The bottom end of the mounting seat side plate 82 is bent outward to form a mounting seat connecting portion 83 which is fixedly connected to the secondary mounting platform 212.

Specifically, seat bolt holes 84 are provided at two ends of each mounting seat connecting portion 83, and secondary bolt holes 2121 are provided in the secondary mounting platform 212. The mounting seat connecting portion 83 is fixed to the secondary mounting platform 212 by connecting the mounting seat bolt holes 84 with bolts.

Further, a mounting seat positioning projection 85 is provided on the bottom surface of each mounting seat connecting portion 83, and the mounting seat positioning projection 85 on two of the mounting seat connecting portions 83 can be cylindrical. The secondary mounting platform 212 is correspondingly provided with secondary positioning holes 2122, one of which is a circular positioning hole and the other is an oblong positioning hole. One mounting seat positioning protrusion 85 is inserted into the circular positioning hole for accurate positioning, and the other mounting seat positioning protrusion 85 is inserted into the oblong positioning hole, which can adapt to the production deviation of the mounting seat positioning protrusion 85 and avoid the problem that the production takt time cannot be affected due to the production deviation.

Alternatively, the mounting seat positioning protrusion 85 on one of the mounting seat connecting portions 83 has a cylindrical shape, and the mounting seat positioning protrusion 85 on the other mounting seat connecting portion 83 has a long cylindrical shape. The secondary mounting platform 212 is provided with a circular positioning hole and an oblong positioning hole correspondingly, and a cylindrical mounting seat positioning protrusion 85 and a long cylindrical mounting seat positioning protrusion 85 are respectively inserted.

The lower surface of the mounting seat top plate 81 of the secondary suspension mounting seat 8 is provided with sidebeam positioning counterbore 86, the number and position of which correspond to the second sidebeam positioning pins 16. During assembly, the sidebeam 1 and the secondary suspension mounting seat 8 are positioned by inserting the second sidebeam positioning pin 16 into the sidebeam positioning counterbore 86.

On the basis of the above technical solution, the bogie frame can also be improved as follows. As shown in Fig. 12 and Fig. 15, a lower transition plate 871 is disposed between the sidebeam 1 and the crossbeam 2 to cushion the force between the sidebeam 1 and the crossbeam 2. Particularly in a case where the sidebeam 1 is made of an elastic fiber composite material the lower transition plate 871 can reduce the wear of the sidebeam 1 and ensure the strength of the sidebeam 1.

Specifically, the lower transition plate 871 can be a plate-like structure parallel to the horizontal plane. Further, two sides of the lower transition plate 871 are extended upward to two sides of the sidebeam 1 and wrap the sidebeam 1. The lower transition plate 871 is provided with a through hole through which the first sidebeam positioning pin 15 passes.

Further, an upper transition plate 872 is provided between the sidebeam 1 and the secondary suspension mounting seat 8. The force between the sidebeam 1 and the secondary mounting seat 8 is cushioned. Particularly in a case where the sidebeam 1 is made of an elastic fiber composite material the upper transition plate 872 can reduce the wear of the sidebeam 1 and ensure the strength of the sidebeam 1.

Specifically, the upper transition plate 872 can be a plate-like structure parallel to the horizontal plane. Further, two sides of the upper transition plate 872 are extended downward to two sides of the sidebeam 1 and wrap the sidebeam 1. The upper transition plate 872 is correspondingly provided with a through hole through which the second sidebeam positioning pin 16 passes.

Fig. 16 is a structural schematic view of the bogie frame with the secondary suspension mounting seat disposed thereon provided by the embodiment of the present disclosure. Further, the upper surface of the mounting seat top plate 81 is connected to the secondary suspension device. The secondary suspension device can be a rubber stack, steel spring, or air spring. In the embodiment, an air spring 810 is employed as a secondary suspension device. As shown in Fig. 16, a secondary mounting portion 88 is provided on the upper surface of the mounting seat top plate 81, which is an annular structure protruded from the mounting seat top plate 81, and the center line of the secondary mounting portion 88 is extended in the vertical direction. The bottom of the air spring 810 is inserted in the secondary mounting portion 88 to limit the horizontal direction.

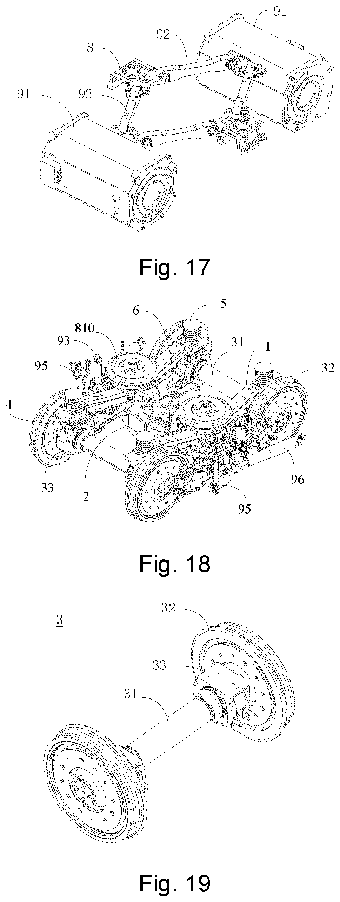

Fig. 17 is a structural schematic view of the secondary suspension mounting seat provided by the embodiment of the present disclosure, which is connected to the traction motor through the motor balancing link. As shown in Figs. 13, 14, and 17, the secondary suspension mounting seat 8 is further provided with a motor mounting portion 89 for connecting one end of the motor balancing link 92, and the other end of the motor balancing link 92 is connected to the shell of the traction motor 91 provided on the wheelset. The traction motor 91 is a direct driver, which is connected to the shaft 31 in the wheelset 3 and directly drives the shaft 31 to rotate, thus driving the wheels 32 to rotate.

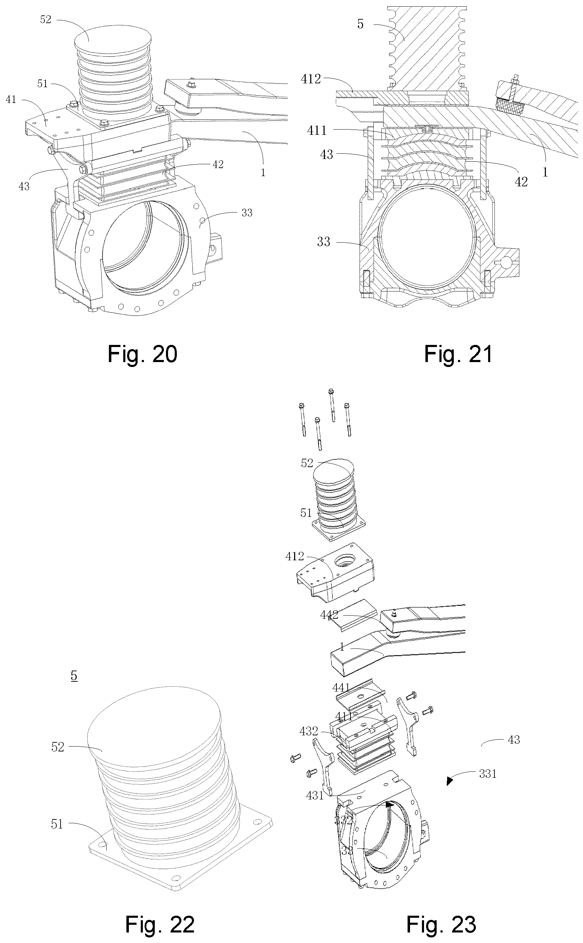

Fig. 18 is a structural schematic view of the bogie frame provided by the embodiment of the present disclosure, Fig. 19 is a structural schematic view of the wheelset in the bogie frame provided by the embodiment of the present disclosure, and Fig. 20 is a partial schematic view of the bogie frame provided by the embodiment of the present disclosure with a safety stopper device. As shown in Figs. 18 to 20, the bogie frame provided in the embodiment includes the sidebeam 1, the crossbeam 2, the wheelset 3 and the primary suspension device 4.

The number of wheelsets 3 is two, which are arranged on two sides of the crossbeam 2 and located below the end of the sidebeam 1. The wheelset 3 includes an shaft 31, wheels 32, and an shaft box 33. The number of wheels 32 is two, which are symmetrically disposed on the shaft 31. The number of shaft boxes 33 is two, which are symmetrically disposed on the shaft 31. The shaft box 33 can be located inside or outside the wheel 32. In the embodiment, the shaft box 33 is located inside the wheel 32 as an example.

The primary suspension device 4 is provided between the sidebeam 1 and the shaft box 33 for transmitting a vertical force between the sidebeam 1 and the shaft box 33, and also for buffering vibration between the shaft box 33 and the sidebeam 1. The first suspension device has certain stiffness and elastic deformation ability, and the elastic deformation direction is extended vertically.

In addition, the bogie frame provided in the embodiment further includes a safety stopper device 5, which is disposed on the top of the primary suspension device 4, and there is a gap between the safety stopper device 5 and the car body during normal operation of the vehicle. In a case where the sidebeam 1 fails, the car body falls on the safety stopper device 5, and the safety stopper device 5 is bearing the car body load.

According to the technical solution, the primary suspension device is disposed between the sidebeam and the shaft box, and the safety stopper device is disposed on the top of the primary suspension device. In a case where the sidebeam fails, the car body falls on the safety stopper device, and the safety stopper device is bearing with the weight load of the car body, thus protecting the normal operation of the shaft and improving the operation safety.

On the basis of the above technical solution, the embodiment specifically discloses the implementation mode of the bogie frame: the safety stopper device 5 has certain rigidity and can bear the weight load of the car body. For example, the safety stopper device 5 is made of a rigid material.

Alternatively, the safety stopper device 5 may have a certain elastic cushioning capacity while having a certain stiffness, and can buffer vibration between the car body and the shaft box.

Fig. 21 is a sectional view of the bogie frame provided by the embodiment of the present disclosure with a safety stopper device, Fig. 22 is a structural schematic view of the safety stopper device provided by the embodiment of the present disclosure, and Fig. 23 is an explosive view of the assembly of the safety stopper device, the primary suspension device and the shaft box provided by the embodiment of the present disclosure. As shown in Figs. 21 to 23, in the present embodiment, the safety stopper device 5 includes a safety stopper seat 51 and a safety stopper 52. The safety stopper 52 is fixed to the safety stopper seat 51 mounted to the top of the primary suspension device 4. The safety stopper 52 has a certain elastic deformation capability, and the elastic deformation direction of the safety stopper 52 is extended in the vertical direction, i.e. has the same elastic deformation direction as the primary suspension device 4.

In another specific implementation, the safety stopper 52 includes a plurality of metal layers and a plurality of rubber layers disposed in a stack, and the rubber layer is disposed between two adjacent metal layers. The metal layer and the rubber layer form an integrated structure through the vulcanization process. The metal layer at the bottom is in contact with the safety stopper seat 51. The rubber layer has a certain elastic buffer capacity, and the metal layer has a certain stiffness to bear the weight load of the car body.

The embodiment provides a concrete implementation mode of a primary suspension device 4. The primary suspension device 4 includes a primary suspension mounting seat 41 and a primary suspension 42. The primary suspension 42 is disposed on the top of the shaft box 33, and a primary positioning post is disposed on the bottom of the primary suspension 42, which is correspondingly inserted into the primary positioning hole 331 disposed on the top of the shaft box 33 for restricting the horizontal movement of the primary suspension 42.

The primary suspension mounting seat 41 is provided at the top of the primary suspension 42, and a safety stopper seat 51 in the safety stopper device 5 is mounted on the primary suspension mounting seat 42. A receiving space for receiving the end of the sidebeam 1 is provided in the primary suspension mounting seat 41, and the end of the sidebeam 1 penetrates into the receiving space.

In a specific implementation mode, the primary mounting seat 41 is formed by covering and connecting a lower mounting seat 411 with an upper mounting seat 412, and the receiving space is formed between the lower mounting seat 411 and the upper mounting seat 412. Specifically, the lower mounting seat 411 is made of a metal material and is vulcanized with rubber on the top of the primary suspension 42 to form an integral structure. The upper mounting seat 411 is fixedly connected to the upper mounting seat 412 by bolts.

In a specific implementation mode, bolt holes are provided corresponding to the safety stopper seat 51, the upper mounting seat 412 and the lower mounting seat 411, and bolts are passed through the safety stopper seat 51, the upper mounting seat 412, and the lower mounting seat 411 sequentially from top to fix the three seats.

The upper mounting seat 412 is provided with a weight reduction hole, which can reduce the weight of the primary suspension device 4, thereby reducing the dead weight of the bogie frame and improving the traction efficiency of the railway vehicle. The weight reduction hole is circular and provided on the upper mounting seat 412, and the center line is extended vertically.

Further, a wheelset lift 43 is provided, the top end of which is connected to the primary suspension mounting seat 41 and the bottom end of which is connected to the shaft box 33, so as to restrict the vertical movement of the primary suspension 42 and prevent the primary suspension 42 from being separated from the shaft box 33 due to vertical movement.

In a specific implementation mode, the top of the shaft box 33 is planar, and two primary positioning holes 331 are disposed on the middle of the top of the shaft box 33 and disposed on intervals in the longitudinal direction. A limiting edge is extended in a direction perpendicular to the center line of the shaft box (i.e., the longitudinal direction), and a limiting recess 332 is formed on the limiting edge. The bottom end of the wheelset lift 43 is extended to two sides to form a limiting stopper protrusion 431. The wheelset lift 43 can be fitted in the limiting recess 332, and the limiting stopper protrusion 431 is restricted below the limiting edge. The limiting edge prevents the wheelset lift 43 from moving upward.

Further, two connecting arms 432 are diverged upward from the middle portion of the wheelset lift 43 and are respectively connected to the end surfaces of the lower mounting seat 411.

The embodiment provides a specific implementation mode: the wheelset lift 43 has a "Y" shaped structure. In the assembly process, the middle portion of the wheelset lift 43 is inserted into the limiting recess 332, the two connecting arms 432 at the top of the wheelset lift 43 are respectively connected to the longitudinal end surface of the lower mounting seat 411 through bolts, and the limiting stopper protrusion 431 at the bottom is located below the limiting edge.

Each of the longitudinal ends of the lower mounting seat 411 is provided with a wheelset lift 43, and the longitudinal movement of the wheelset lift 43 is restricted by bolting to the wheelset lift 43, and the shaft box 33 restricts the vertical movement of the wheelset lift 43. With the above-mentioned embodiments, the vertical movement of the primary suspension 42 is restricted so as to avoid being separated from the shaft box 33 due to excessive movement.

The wheelset lift 43 can also play an auxiliary lifting role during lifting the bogie frame. Specifically, during the hoisting process, the sidebeam moves upward, and the wheelset is driven to move upward by the primary suspension mounting seat and the wheelset lift 43.

The sidebeam 1 provided in the embodiment can be made of a composite material, such as a carbon fiber composite material, so that the sidebeam 1 has a certain flexibility and improves the adaptability to the car body load. On this basis, a lower pad plate 441 can be provided between the sidebeam 1 and the lower mounting seat 411, and two sides of the lower pad plate 441 are extended upwardly to the bottom surface higher than the end of the sidebeam 1 to cover the side surface of the sidebeam 1. The lower pad plate 441 can reduce the wear of the sidebeam 1.

An upper pad plate 442 is provided between the sidebeam 1 and the upper mounting seat 412, and two sides of the upper pad plate 442 are extended downward to the top surface lower than the end of the sidebeam 1 and cover the side surface of the sidebeam 1. The upper pad plate 442 can reduce the wear of the sidebeam 1.

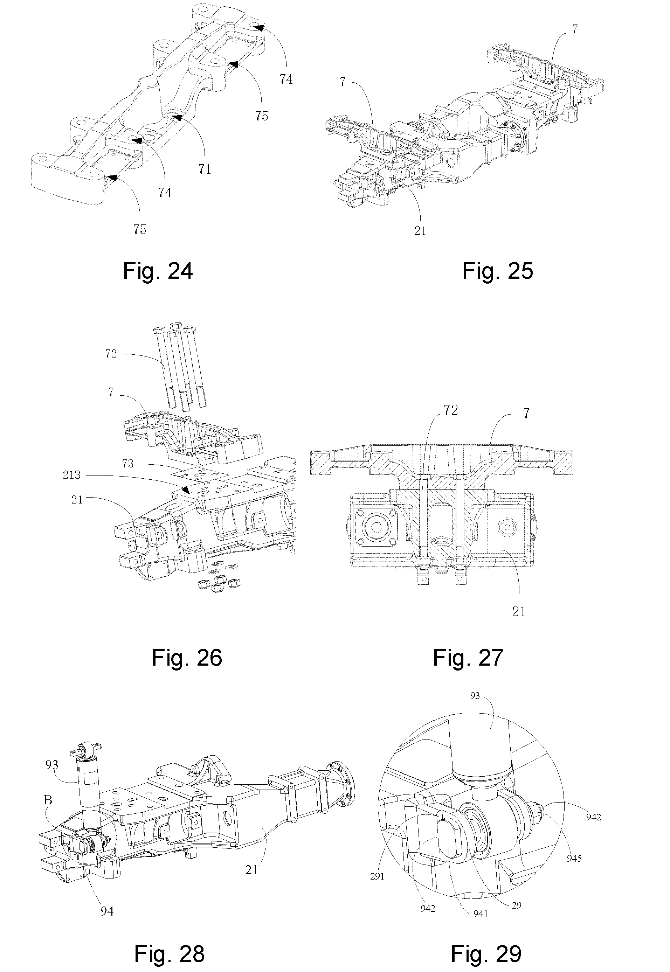

Fig. 24 is a perspective view of a brake hanging bracket of the bogie frame provided by the embodiment of the present disclosure. Fig. 25 is a schematic view of the connection between the brake hanging bracket and the crossbeam provided by the embodiment of the present disclosure. Fig. 26 is an exploded view of the connection between the brake hanging bracket and the crossbeam provided by the embodiment of the present disclosure. Fig. 27 is a sectional view of the brake hanging bracket and the crossbeam provided by the embodiment of the present disclosure. As shown in Figs. 2, 24 to 27, the crossbeam main body 21 is provided with a brake hanging bracket connecting interface for connecting with the brake hanging bracket 7.

One implementation mold is that the brake hanging bracket connecting interface is a brake bolt hole 213 provided in the crossbeam main body 21, and is connected to the brake hanging bracket 7 through a brake crossbeam connecting bolt 72. Specifically, the top surface of the crossbeam main body 21 is provided with a brake mounting platform protruded from the top surface of the crossbeam main body 21, and the brake mounting platform is provided with a bolt hole for connecting with the brake device as a brake device interface. In a specific implementation mode, the brake mounting platform and the secondary mounting platform 212 are integrated, and a brake bolt hole 213 is disposed on the brake mounting platform, for connecting with the brake hanging bracket in the brake device.

The brake hanging bracket 7 includes a hanging bracket main body which is extended in the longitudinal direction and is located above the crossbeam. The brake crossbeam connecting holes 71 are provided in the middle portion of the hanging bracket main body. The number of brake crossbeam connecting holes 71 is four, which are symmetrically arranged on two sides of the hanging bracket main body and are respectively connected to brake bolt holes 213 on the crossbeam main body 21 through brake crossbeam connecting bolts 72.

The brake hanging bracket 7 can be made of a rigid material or made of composite fiber material. In the embodiment, the brake hanging bracket 7 is made of carbon fiber material. A brake hanging bracket liner 73 is further provided between the brake hanging bracket 7 and the crossbeam main body 21, and a through hole through the brake hanging bracket liner 73 is correspondingly provided for passing the brake crossbeam connecting bolt 72. The brake hanging bracket liner 73 is employed to protect the brake hanging bracket 7 and reduce the wear thereof. Two ends of the brake hanging bracket 7 are provided with interfaces for connecting the brake device. Specifically, four brake device mounting holes 74 are provided at two ends of the brake hanging bracket 7, which are symmetrically arranged on two sides of the hanging bracket main body and connected to the brake device by bolts.

Further, the bogie frame is further provided with a bogie frame chamber surrounded on the outside of the main structure of the bogie frame, for protecting the bogie frame to avoid sundries on the railway hitting the bogie frame, also for noise reduction and airflow guidance. Two ends of the brake hanging bracket 7 are provided with interfaces for connecting to the bogie frame chamber, such as chamber mounting holes 75, to connect to the bogie frame chamber by bolts.

As shown in Fig. 2, the crossbeam main body 21 is further provided with a connecting interface for the vertical vibration damper, for example. vertical vibration damper mounting lugs 214 are provided on the side of the crossbeam main body 21. The number of vertical vibration damper mounting lugs 214 is two parallel to each other and provided on the side surface of the crossbeam main body 21. A bolt hole is provided in the vertical vibration damper mounting lug 214.

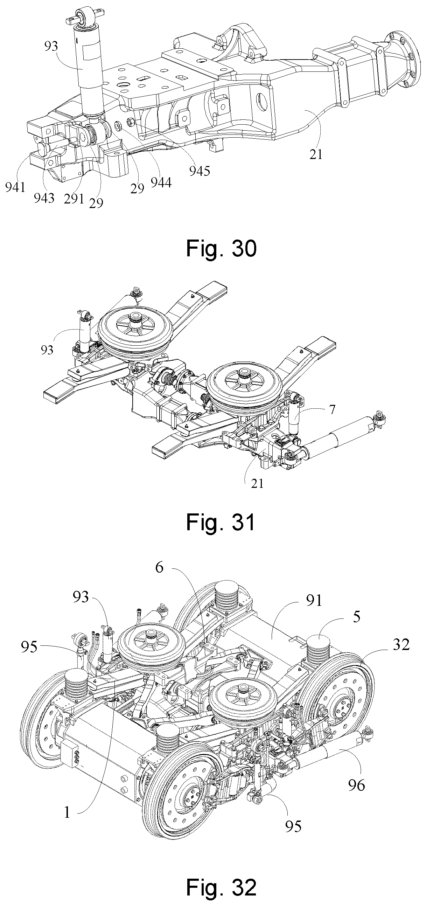

Fig. 28 is a perspective schematic view of the connection between the crossbeam and the vertical vibration damper provided by the embodiment of the present disclosure. Fig. 29 is an enlarged schematic view of area B in Fig. 28. Fig. 30 is an exploded schematic view of the connection between the crossbeam and the vertical vibration damper provided by the embodiment of the present disclosure. Fig. 31 is a schematic view of the arranged position of the vertical vibration damper of the bogie frame provided by the embodiment of the present disclosure. As shown in Figs. 28 to 31, the end of the vertical vibration damper 93 is provided with bolt holes. The crossbeam 2 has mounting lugs 29 provided with mounting holes, and mounting lugs 29 further provided with a limiting surface 291 having at least a portion of a plane for abutting a first side plane 942 of a first bolt head 941.

The first fixing bolt 94 has the first screw 943 and the first bolt head 941 disposed at one end of the first screw 943. The first screw 943 is matched with the mounting hole and the bolt hole, and the first side plane 942 of the first bolt head 941 is abutted against the limiting surface 291.

The upper end of the vertical vibration damper 93 is connected to the car body of the railway vehicle. As shown in Figs. 29 and 30, the joint at the lower end of the vertical vibration damper 93 is provided with bolt holes. The bolt holes are provided through a direction perpendicular to the axial direction of the vertical vibration damper 93.

There can be two vertical vibration dampers 93, and the two vertical vibration dampers 93 are respectively provided on two sides of the longitudinal center line. Accordingly, the crossbeam 2 is provided with two vertical vibration damper interfaces for mounting two vertical vibration dampers 93 respectively. The crossbeam 2 is provided with two pairs of mounting lugs 29, each pair including two corresponding mounting lugs 29. One end of the vertical vibration damper 93 is disposed between two corresponding mounting lugs 29. The mounting lug 29 is provided on the side surface of the crossbeam main body 21 and is extended along the longitudinal direction of the car body.

The mounting lug 29 includes a head end and a tail end, and the head end of the mounting lug 29 is connected to the crossbeam main body 21 of the crossbeam 2. Of the two corresponding mounting lugs 29, the tail end of one mounting lug 29 is disposed inwardly with respect to the outer surface of the head end of the mounting lug 29 away from the outer surface of the other mounting lug, a connecting surface is connected between the outer surface of the head end and the outer surface of the tail end, and at least part of the connecting surface forms a limiting surface 291. In other words, the mounting lug 29 has a step-like structure. The mounting lug 29 has a first step surface and a second step surface, and a connecting surface connecting the first step surface and the second step surface at least partially forms the limiting surface 291.

The first screw 943 of the first fixing bolt 94 is provided through the bolt hole of the vertical vibration damper 93 and the mounting hole of the mounting lug 29. One end of the first screw 943 is provided with the first bolt head 941, the cross-sectional area of the first bolt head 941 is larger than the cross-sectional area of the first screw 943. The first bolt head 941 has at least one first side plane 942.

The head of the bolt includes four sides. Two facing sides are curved surfaces, and the other two facing sides are planes. At least part of the joint between the first end and the second end of the mounting lug 29 is plane, and the joint forms a limiting surface 291, which can face against one of the first side planes 942 of the first bolt head 941 to achieve the purpose of limiting and preventing loosening.

It is to be understood that the configuration of the first bolt head 941 is not limited thereto and the present embodiment is only exampled here. For example, the first bolt head 941 may also have a regular hexagonal structure, in which case the first bolt head 941 has six side planes. The limiting surface 291 of the crossbeam can abut one of the six side planes of the first bolt head 941.

In this example, the limiting surface 291 of the mounting lug 29 can come into face-to-face contact with the first side plane 942 of the first bolt head 941 of the first fixing bolt 94, thereby forming a loosening prevention structure for the first fixing bolt 94. Thus, in a case where the first fixing bolt 94 is impacted and has a tendency to rotate, the limiting surface 291 of the mounting lug 29 can counteract the impact force driving the first fixing bolt 94 to rotate by applying a force on the first side plane 942 of the first bolt head 941, thereby preventing the first fixing bolt 94 from loosening and ensuring the reliability of the connection between the crossbeam and the vertical vibration damper 93.

In one implementation, the first fixing bolt 94 further includes a first nut 945 matched with the first screw 943. The first nut 945 is positioned at one end of the first screw 943 away from the first bolt head 941. The bogie frame further includes a first adjusting gasket 944 positioned between the first nut 945 and the corresponding mounting lug 29. The number of the first adjusting gaskets 944 is adjustable and the number of the first adjusting gaskets 944 can be designed according to actual needs.

In this example, by adjusting the number of the first adjusting gaskets 944, the spacing between the ends of the first nut 945 and the corresponding mounting lugs 29 can be adjusted, further facilitating the improvement of the connection reliability between the vertical vibration damper 93 and the traction center pin.

Fig. 32 is a perspective view of the powered bogie frame provided by the embodiment of the present disclosure. As shown in Figs. 18 and 32, the bogie frame provided by the embodiment can be a non-powered bogie frame. If a traction motor is disposed on the wheelset, the bogie frame is a powered bogie frame, and the traction motor can be a direct driver, the rotor of which directly drives the shaft to rotate.

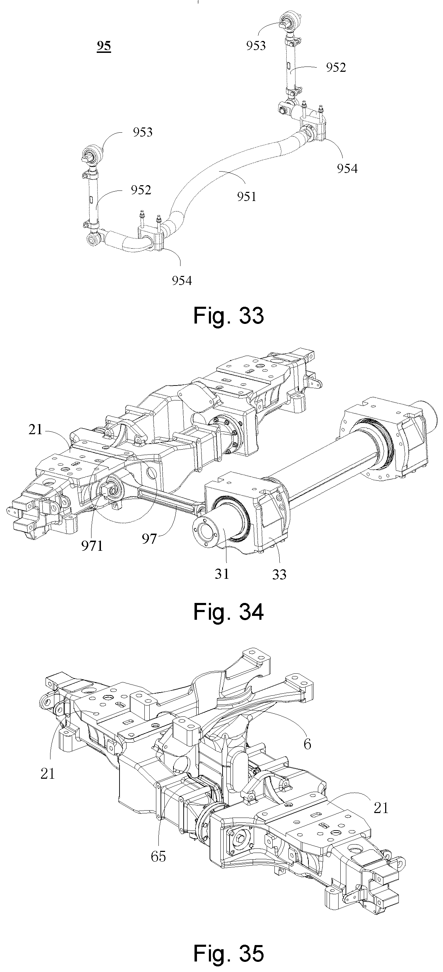

The crossbeam in the embodiment further provides a connecting interface for other components. As shown in Figs. 2, 18, and 32, the crossbeam main body 21 is further provided with a connecting interface for anti-roll torsion bars. For example, an anti-roll torsion bar mounting portion 215 is provided on the side surface of the crossbeam main body 21. The anti-roll torsion bar mounting portion 215 is provided at the bottom of the crossbeam main body 21, extended in the longitudinal direction, and provided with mounting holes extending in the vertical direction. Fig. 33 is a perspective view of an anti-roll torsion bar provided by the embodiment of the present disclosure. As shown in Fig. 33, the anti-roll torsion bar 101 includes a transverse torsion bar 951 and a vertical torsion bar 952 connected at two ends of the transverse torsion bar 951.

The transverse torsion bar 951 is horizontally arranged and extended in the transverse direction. Two ends of the transverse torsion bar 951 are bent and extended outwardly in the longitudinal direction. The vertical torsion bar 952 is extended in the vertical direction and the bottom end of which is connected to the transverse torsion bar 951 through a torsion bar joint 953. The top end of the vertical torsion bar 952 is connected to the car body through the torsion bar joint 953.

The anti-roll torsion bar 95 is connected to the crossbeam by a torsion bar mounting member 954 and specifically to the anti-roll torsion bar mounting portion 215 by bolts. The torsion bar mounting member 954 includes an upper mounting member body with an upper concave arc groove at the bottom and a lower mounting member body with a lower concave arc groove at the top. The upper mounting member body is coupled with the lower mounting member body, and the upper concave arc groove is coupled with the lower concave arc groove to form a circular hole passed through with the transverse torsion bar 951. The upper mounting member body and the lower mounting member body are connected together by bolts and are connected to the anti-roll torsion bar mounting portion 215.

As shown in Figs. 2 and 18, 32, the crossbeam further provides an interface for connecting the anti-yaw damper 96, specifically an anti-yaw damper mounting plate 216 provided at the outer end of the crossbeam main body 21, specifically including two horizontal mounting plates arranged upper and lower, and the longitudinal end surfaces of the horizontal mounting plate are provided with bolt holes for connecting with the anti-yaw damper 96 by elastic joints.

Fig. 34 is a structural schematic view of the crossbeam connected to the shaft box through a tension-only rod provided by the embodiment of the present disclosure. As shown in Figs. 2 and 34, the crossbeam further provides a connecting interface for a tension-only rod 97 connected between the crossbeam and the shaft box 33 for transmitting a longitudinal force between the crossbeam 2 and the shaft box 33. Specifically, the crossbeam main body 21 is provided with a tension-only rod connecting portion 217, and one end of the tension-only rod 97 is provided with a rod joint 971, which is connected to the tension-only rod connecting portion 217 by bolts. The other end of the tension-only rod 97 is provided with a rod joint 971, which is connected to the shaft box 33 by bolts. The rod joint 971 is an elastic joint, which is vulcanized from metal and rubber, and can cushion the buffer force between the tension-only rod, the crossbeam, and the shaft box, and can better adapt to the longitudinal and transverse pulling forces.

Further, as shown in Fig. 2, a nameplate mounting portion 219 is provided on the crossbeam main body 21 for mounting a bogie frame nameplate. The nameplate mounting portion 219 is an inclined plane, and the four corners of the nameplate mounting portion 219 are provided with screw holes for fixing the bogie frame nameplate to the crossbeam 2 by screws.

On the basis of the above technical proposal, the crossbeam 2 is further provided with a center pin connecting portion 218 for matching with the traction center pin 6. As shown in Figs. 18 and 32, the top end of the traction center pin 6 is connected to the car body and the bottom end is connected to the crossbeam 2, and the traction center line 6 is employed to transmit longitudinal traction or braking force between the car body and the bogie frame.

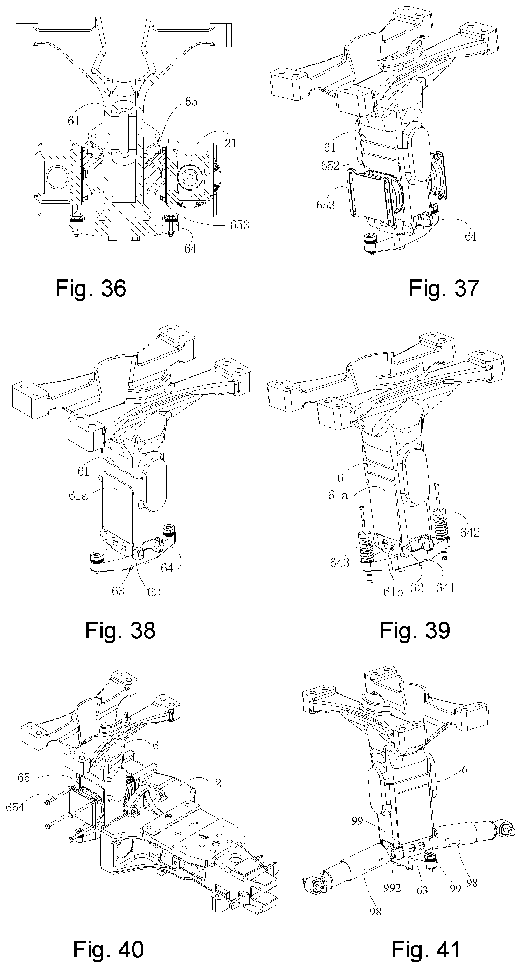

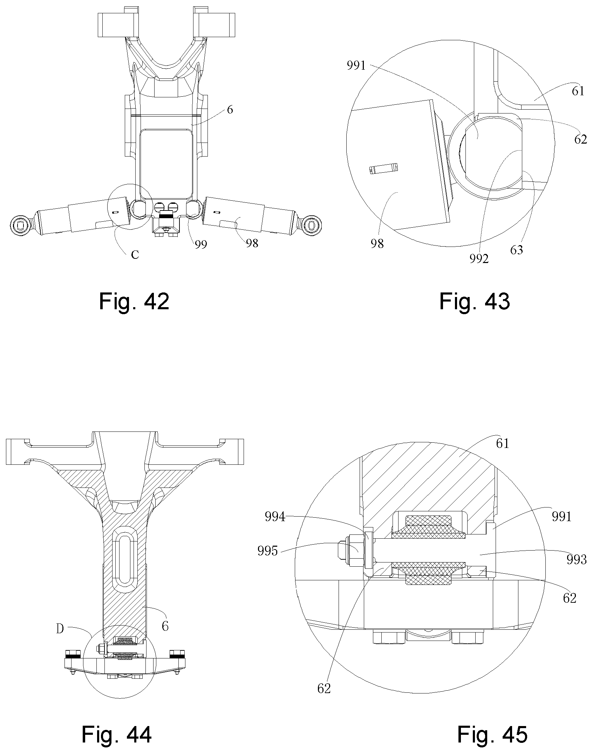

As shown in Figs. 35 to 45, the traction center pin 6 has a center pin main body 61, the bottom of which is inserted in a gap between the two crossbeam single-structures 2. Two longitudinal stoppers 65 are provided at corresponding sides of the center pin main body 61, and the longitudinal stoppers 65 are provided between the crossbeam single-structure 2 and the center pin main body 61. The side of the center pin main body is provided with a stopper contact area 61a which forms an area on the traction center pin 6 for contact with the longitudinal stopper 65. The stopper contact area 61a can be provided on the front side and the rear side of the center pin main body 61 where the front refers to the front of the traveling direction of the railway vehicle.

Two longitudinal stoppers 65 are respectively provided in the stopper contact area 61a of the traction center pin 6. One side of the longitudinal stopper 65 is in contact with the stopper contact area 61a and the other side is connected to the center pin connecting portion 218 of the crossbeam 2 by a plurality of stopper fixing bolts 654. In the implementation, the center pin connecting portion 218 is disposed on the crossbeam connecting arm 22, the center pin connecting portion 218 is relatively located at the middle of the crossbeam connecting arm 22, one or more first adjusting gaskets 944 are disposed between the longitudinal stopper 65 and the crossbeam 2, and the distance between the longitudinal stopper 65 and the traction center pin 6 is adjusted by increasing or decreasing the first adjusting gaskets 944. The longitudinal stopper 65 is in contact with the traction center pin 6 to transmit longitudinal traction force and longitudinal braking force.

The longitudinal stopper 65 has a stopper main body 652 and a mounting flange 653. The periphery of the mounting flange 653 is protruded from the stopper main body 652. The mounting flange 653 is connected to the crossbeam 2 by the plurality of stopper fixing bolts 654. In this example, the periphery of the mounting flange 653 is protruded from the stopper main body 92, thereby providing a larger operating space for mounting the first fixing bolt 94 and facilitating to reduce assembly difficulty.

The traction center pin 6 further includes a mounting arm 62 provided at the lower portion of the center pin main body 61 and a lift 64 provided at the lower end of the center pin main body 61. The mounting arm 62 is employed for mounting the transverse vibration damper 98. The lift 64 is employed for contacting the crossbeam 2 during lifting the car body, so as to realize the lifting function of the bogie frame.

Specifically, the center pin main body 61 may include a columnar structure and a car body connecting arm. The upper end of the columnar structure can be provided with two transition sections relatively arranged. The transition section can have a curved shape, for smooth connecting with the connecting arm of the car body. The connecting arm of the car body is connected to the transition section of the columnar structure, and the connecting arms of the car body are respectively located on two sides of each transition section along the longitudinal direction. A bolt hole is disposed on the side of the connecting arm of the car body away from the transition section. The connecting arm of the car body is employed for connecting with the car body.

The lower end of the columnar structure may have corresponding mounting arms 62 for mounting the transverse vibration damper 98. The mounting arm 62 is located relatively below the longitudinal stopper 65. The mounting arm 62 is fastened to the transverse vibration damper 98 by bolts.

Exemplarily, two pairs of the mounting arms 62 are respectively provided on corresponding two sides of the center pin main body 61. Each pair of mounting arms 62 has two oppositely disposed mounting arms. A joint at the end of the transverse vibration damper 98 is interposed between two opposite mounting arms 62 in the one pair. Each mounting arm 62 is provided with a mounting hole which can be aligned with a bolt hole at the joint at the end of the corresponding transverse vibration damper 98. The bolt hole is disposed through in the direction perpendicular to the axial direction of the transverse vibration damper 98.

The second fixing bolt 99 has a second screw 993 disposed through the bolt hole of the transverse vibration damper 98 and the mounting hole of the mounting arm 62. One end of the second screw 993 is provided with a second bolt head 991 having a cross-sectional area larger than the second screw 993. The second bolt head 991 has at least one of the second side plane 992. For example, the second bolt head 991 includes four side surfaces, two facing side surfaces are curved surfaces, and the other two facing side surfaces are plane surfaces.

The traction center pin 6 is further provided with a limiting surface 63, at least part of which is a plane surface for contacting with the side plane surfaces of the second bolt head 991. Exemplarily, of two opposite mounting arms 62 in the one pair, an outer surface of one mounting arm 62 away from the other mounting arm 62 is disposed inwardly with respect to a corresponding side surface of the center pin main body 61, a connecting surface is connected between the outer surface of the mounting arm 62 and the corresponding side surface of the center pin main body 61, and at least part of the connecting surface forms the limiting surface 63.

In other words, the mounting arm 62 and the center pin main body 61 form a step-like structure. The outer surface of the mounting arm 62 is a first step surface, the corresponding side surface of the center pin main body 61 is a second step surface, and the connecting surface connecting the first step surface and the second step surface is at least partially formed with the limiting surface 63.

In this example, the limiting surface 63 of the traction center pin 6 can face-to-face contact with the second side plane 992 thereby forming a loosening prevention structure for preventing loosening of the second fixing bolt 99. Thus, in a case where the second fixing bolt 99 is impacted and has a tendency to rotate, the limiting surface 63 of the traction center pin 6 can counteract the impact force driving the rotation of the second fixing bolt 99 by applying a force on the side plane of the bolt head, thereby preventing the second fixing bolt 99 from loosening and ensuring the connection reliability between the traction center pin 6 and the transverse vibration damper 98.

Alternatively, the second fixing bolt 99 further includes a second nut 995 matched with the second screw 993. The second nut 995 is located at the end of the second screw 993 corresponding to the second bolt head 991. The bogie frame further includes a third adjusting gasket 994 which is located between the second nut 995 and the corresponding mounting arm 62. The third adjusting gasket 994 is employed for adjusting the spacing between the nut end and the corresponding mounting arm 62.

The lift 64 is connected to the center pin main body 61 by a plurality of threaded pins arranged at intervals. Exemplarily, the threaded pins can be two. The threaded pin can be disposed between two pairs of mounting arms 62. The center pin main body 61 is provided with a mating hole 61b matched with the threaded pin. In the vertical direction, the mating hole 61b can be provided close to the threaded hole of the mounting arm 61 to facilitate a more compact structure of the traction center pin 6. Exemplarily, the center of the mating hole 61b can be in the same line as the center of the bolt hole on the mounting arm 62. The center of the mating hole 61b can be higher than the center of the bolt hole on the mounting arm 62.

The lift 64 includes a lift mounting main body 641 and a lift stopper block 642. The lift mounting main body 641 is connected to the center pin main body 61. In a direction perpendicular to the axial direction of the center pin main body 61, two corresponding ends of the lift mounting main body 641 respectively are extended out of the center pin main body 61. The lift stopper block 642 is disposed at two corresponding ends of the lift mounting main body 641. The lift stopper block 642 is employed to abut the crossbeam during lifting the traction center pin 6.

In this example, under normal working conditions, there is a proper distance between the lift stopper block 642 and the crossbeam 2. During the lifting of the car body, the traction center pin 6 is lifted accordingly, and the lift stopper block 642 is contacted with the crossbeam 2 to realize the lifting function of the bogie frame.

Further, the lift mounting main body 641 can be connected to the traction pin body by a plurality of bolts provided at intervals to further improve the reliability of the connection between the lift 64 and the traction center pin 6.

In addition, a second adjusting gasket 643 can be provided between the lifting stopper 642 and the lifting mounting body 641, and the second adjusting gasket 643 is employed for adjusting the spacing between the lift stopper block 642 of the lift 64 and the crossbeam 2. The adjusting gasket is designed as a multi-layer gasket. In a case where the wheel is worn, it is necessary to add gaskets under/above the empty spring to keep the height of the floor surface. Because the traction center pin 6 is respectively connected to the car body and the overall lift, the traction center pin 6 and the overall lift are lifted together with the car body, and the distance between the bottom of the crossbeam 2 and the lift 4 is reduced. By reducing the number of appropriate gaskets, the distance between the bottom of the crossbeam and the lift can maintain in the specified size.

Alternatively, two lift stopper blocks 642 and two pairs of mounting arms 62 are respectively provided in four sides of the center pin main body 61, so as to prevent the transverse vibration damper 98 and the lift 64 from interfering with each other.

The crossbeam provided by the embodiment provides interfaces for a plurality of components, integrates the arrangement of a plurality of components, and has a high degree of integration. Compared with the conventional bogie frame, a large number of components such as mounting seats are omitted, the number of components is reduced, the processing workload is reduced, and the production cost is reduced.

The embodiment further provides a bogie frame, as shown in Fig. 18 or Fig. 32. The bogie frame includes a sidebeam, a crossbeam, a wheelset, a primary suspension, a traction center pin, a transverse vibration damper, a vertical vibration damper, an anti-rolling torsion bar, an anti-yaw damper, and other components, all of which can refer to the above disclosure.

The embodiment further provides a railway vehicle, which includes the bogie frame provided by any of the above disclosure. A railway vehicle includes a plurality of carriages connected in series, and a bogie frame is disposed below the carriages. The bogie frame and the railway vehicle provided by the embodiment have the same technical advantages as the sidebeam.

## Claims

1. A crossbeam for a bogie frame, comprising: two crossbeam single-structures (2);
wherein each crossbeam single-structure (2) includes:
a crossbeam main body (21), an inner end surface of the crossbeam main body (21) facing the other crossbeam single-structure (2), the inner end surface of the crossbeam main body (21) having a first mounting area and a second mounting area; and
a crossbeam connecting arm (22) extended in a direction parallel to the crossbeam main body (21), one end of the crossbeam connecting arm (22) being fixed to the first mounting area in the crossbeam main body (21), and the other end of the crossbeam connecting arm (22) being connected to the second mounting area of the crossbeam main body (21) in the other crossbeam single-structure (2) through a crossbeam connecting device;
**characterized in that**
the middle top surface of the crossbeam main (21) body is provided with a sidebeam mounting interface for assembling with a sidebeam (1) of the bogie frame.

2. The crossbeam according to claim 1, wherein the width of the end of the crossbeam main body (21) facing the other crossbeam single-structure (2) is greater than the width of the middle of the crossbeam main body (21), the first mounting area and the second mounting area are respectively located at two ends of the inner end surface of the crossbeam main body (21) along the width direction, and a gap is formed between the two crossbeam connecting arms (22) for receiving a traction center pin (6) of the bogie frame.

3. The crossbeam according to claim 2, wherein the crossbeam connecting device includes: a crossbeam connecting pin (23); and
the first end of the crossbeam connecting pin (23) is connected to the crossbeam connecting arm (22), and the second end is inserted and fixed in a first pin hole (210) opened in the second mounting area.

4. The crossbeam according to claim 3, wherein the crossbeam connecting device further includes a crossbeam connecting flange (24), a crossbeam connecting joint (25), and a crossbeam connecting gasket (26);
the crossbeam connecting joint (25) has an annular structure, and is press-fitted in the first pin hole (210);
the second end of the crossbeam connecting pin (23) is press-installed in the crossbeam connecting joint (25), the crossbeam connecting gasket (26) is arranged at the second end surface of the crossbeam connecting pin (23) and is coaxial with the crossbeam connecting pin (23), the outer diameter of the crossbeam connecting gasket (26) is larger than the inner diameter of the crossbeam connecting joint (25), and the inner diameter of the crossbeam connecting gasket (26) is smaller than the outer diameter of the crossbeam connecting pin (23);
the second end of the crossbeam connecting pin (23) is provided with an internal thread hole fixed by bolts through the crossbeam connecting gasket (26); and
the inner ring of the crossbeam connecting flange (24) is inserted into the first pin hole (210) and abuts against the axial end of the crossbeam connecting joint (25), and the outer ring of the crossbeam connecting flange (24) is connected to the crossbeam main body (21) by bolts.

5. The crossbeam according to claim 4, wherein the crossbeam connecting joint (25) includes a metal shell, a metal inner ring, and a rubber block arranged therebetween, and the rubber block is vulcanized with the metal shell and the metal inner ring to form an integrated structure.

6. The crossbeam according to claim 4, wherein the crossbeam connecting device further includes: at least one crossbeam mounting ring (27) arranged in the first pin hole (210) and located between the crossbeam connecting joint (25) and the crossbeam main body (21), and the crossbeam connecting pin (23) sequentially passes through at least one crossbeam mounting ring (27) and the crossbeam connecting joint (25).

7. The crossbeam according to claim 3, wherein the first end of the crossbeam connecting pin (23) is inserted in a second pin hole provided on the end surface of the crossbeam connecting arm (22).

8. The crossbeam according to claim 2, wherein the middle top surface of the crossbeam main body (21) is provided with two secondary mounting platforms (212) protruded from the top surface of the crossbeam main body (21), and the secondary mounting platforms (212) are provided with bolt holes for connecting secondary suspension devices, and the area between the two secondary mounting platforms (212) is for receiving the sidebeams (1).

9. The crossbeam according to claim 2, wherein the top surface of the crossbeam main body (21) is provided with a braking mounting platform protruded from the top surface of the crossbeam main body (21), and the braking mounting platform is provided with a bolt hole for connecting the braking device.

10. The **crossbeam** according to claim 2, wherein a vertical vibration damper mounting portion is provided on the side surface of the crossbeam main body (21) for connecting with a vertical vibration damper (93).

11. A bogie frame comprising: a crossbeam according to any one of claims 1 to 10.

12. A railway vehicle comprising: a bogie frame according to claim 11.

13. The crossbeam according to claim 3, wherein the outer peripheral surface of the crossbeam connecting pin (23) is extended outward in the radial direction to form a mounting flange connected to the flange arranged at the end of the crossbeam connecting arm (22) by bolts.

14. The crossbeam according to claim 2, wherein an anti-roll torsion bar mounting portion (215) is provided at the bottom surface of the crossbeam main body (21) for connecting with an anti-roll torsion bar (95).

15. The crossbeam according to claim 2, wherein an anti-yaw vibration damper mounting portion is provided at the outer end of the crossbeam main body (21) away from the other crossbeam single-structure (2) for connecting with a anti-yaw damper (96).

## Patentansprüche

1. Querträger für einen Drehgestellrahmen, der aufweist: zwei Querträger-Einzelstrukturen (2);
wobei jede Querträger-Einzelstruktur (2) aufweist:
einen Querträgerhauptkörper (21), wobei eine innere Endfläche des Querträgerhauptkörpers (21) der anderen Querträger-Einzelstruktur (2) zugewandt ist, wobei die innere Endfläche des Querträgerhauptkörpers (21) einen ersten Montagebereich und einen zweiten Montagebereich aufweist; und
einen Querträgerverbindungsarm (22), der sich in einer Richtung parallel zum Querträgerhauptkörper (21) erstreckt, wobei ein Ende des Querträgerverbindungsarms (22) am ersten Montagebereich in dem Querträgerhauptkörper (21) befestigt ist und das andere Ende des Querträgerverbindungsarms (22) am zweiten Montagebereich des Querträgerhauptkörpers (21) in der anderen Querträger-Einzelstruktur (2) durch eine Querträgerverbindungsvorrichtung verbunden ist;
**dadurch gekennzeichnet, dass**
die mittlere obere Fläche des Querträgerhauptkörpers (21) mit einer Längsträgermontageschnittstelle zum Zusammenbau mit dem Längsträger (1) des Drehgestellrahmens versehen ist.

2. Querträger nach Anspruch 1, wobei die Breite des Endes des Querträgerhauptkörpers (21), das der anderen Querträger-Einzelstruktur (2) zugewandt ist, größer ist als die Breite der Mitte des Querträgerhauptkörpers (21), der erste Montagebereich und der zweite Montagebereich jeweils an zwei Enden der inneren Endfläche des Querträgerhauptkörpers (21) entlang der Breitenrichtung angeordnet sind, und ein Spalt zwischen den beiden Querträgerverbindungsarmen (22) zur Aufnahme eines Zugmittelstifts (6) des Drehgestellrahmens ausgebildet ist.

3. Querträger nach Anspruch 2, wobei die Querträgerverbindungsvorrichtung aufweist: einen Querträgerverbindungsstift (23); und
das erste Ende des Querträgerverbindungsstifts (23) mit dem Querträgerverbindungsarm (22) verbunden ist und das zweite Ende in ein erstes Stiftloch (210), das im zweiten Montagebereich geöffnet ist, eingeführt und befestigt ist.

4. Querträger nach Anspruch 3, wobei die Querträgerverbindungsvorrichtung ferner einen Querträgerverbindungsflansch (24), ein Querträgerverbindungsgelenk (25) und eine Querträgerverbindungsdichtung (26) aufweist;
wobei das Querträgerverbindungsgelenk (25) eine ringförmige Struktur aufweist und in das erste Stiftloch (210) eingepresst wird;
wobei das zweite Ende des Querträgerverbindungsstifts (23) in das Querträgerverbindungsgelenk (25) eingepresst ist, die Querträgerverbindungsdichtung (26) an der zweiten Endfläche des Querträgerverbindungsstifts (23) angeordnet ist und koaxial mit dem Querträgerverbindungsstift (23) ist, der Außendurchmesser der Querträgerverbindungsdichtung (26) größer ist als der Innendurchmesser des Querträgerverbindungsgelenks (25), und der Innendurchmesser der Querträgerverbindungsdichtung (26) kleiner ist als der Außendurchmesser des Querträgerverbindungsstifts (23);
wobei das zweite Ende des Querträgerverbindungsstifts (23) mit einer Innengewindebohrung versehen ist, die mit Bolzen durch die Querträgerverbindungsdichtung (26) befestigt ist; und
wobei der Innenring des Querträgerverbindungsflansches (24) in das erste Stiftloch (210) eingeführt ist und am axialen Ende des Querträgerverbindungsgelenks (25) anliegt, und wobei der Außenring des Querträgerverbindungsflansches (24) mit dem Querträgerhauptkörper (21) durch Schrauben verbunden ist.

5. Querträger nach Anspruch 4, wobei das Querträgerverbindungsgelenk (25) eine Metallschale, einen Metallinnenring und einen dazwischen angeordneten Gummiblock aufweist und der Gummiblock mit der Metallschale und dem Metallinnenring vulkanisiert ist, um eine integrierte Struktur zu bilden.

6. Querträger nach Anspruch 4, wobei die Querträgerverbindungsvorrichtung ferner aufweist: mindestens einen Querträgermontagering (27), der in dem ersten Stiftloch (210) angeordnet ist und sich zwischen dem Querträgerverbindungsgelenk (25) und dem Querträgerhauptkörper (21) befindet, und wobei der Querträgerverbindungsstift (23) nacheinander durch mindestens einen Querträgermontagering (27) und das Querträgerverbindungsgelenk (25) verläuft.

7. Querträger nach Anspruch 3, wobei das erste Ende des Querträgerverbindungsstifts (23) in ein zweites Stiftloch eingeführt ist, das an der Endfläche des Querträgerverbindungsarms (22) vorgesehen ist.

8. Querträger nach Anspruch 2, wobei die mittlere Oberseite des Querträgerhauptkörpers (21) mit zwei sekundären Montageplattformen (212) versehen ist, die von der Oberseite des Querträgerhauptkörpers (21) vorstehen, und die sekundären Montageplattformen (212) mit Bolzenlöchern zur Verbindung sekundärer Aufhängungsvorrichtungen versehen sind, und der Bereich zwischen den beiden sekundären Montageplattformen (212) zur Aufnahme der Seitenträger (1) dient.

9. Querträger nach Anspruch 2, wobei die Oberseite des Querträgerhauptkörpers (21) mit einer Bremsmontageplattform versehen ist, die von der Oberseite des Querträgerhauptkörpers (21) vorsteht, und die Bremsmontageplattform mit einem Bolzenloch zur Verbindung der Bremsvorrichtung versehen ist.

10. Querträger nach Anspruch 2, wobei an der Seitenfläche des Querträgerhauptkörpers (21) ein vertikaler Schwingungsdämpfer-Montageabschnitt zur Verbindung mit einem vertikalen Schwingungsdämpfer (93) vorgesehen ist.

11. Drehgestellrahmen, der aufweist: einen Querträger nach einem der Ansprüche 1 bis 10.

12. Schienenfahrzeug, das aufweist: einen Drehgestellrahmen nach Anspruch 11.

13. Querträger nach Anspruch 3, wobei die Außenumfangsfläche des Querträgerverbindungsstifts (23) in radialer Richtung nach außen verlängert ist, um einen Montageflansch zu bilden, der mit dem am Ende des Querträgerverbindungsarms (22) angeordneten Flansch durch Bolzen verbunden ist.

14. Querträger nach Anspruch 2, wobei an der Unterseite des Querträgerhauptkörpers (21) ein Anti-Roll-Torsionsstab-Montageabschnitt (215) zur Verbindung mit einem Anti-Roll-Torsionsstab (95) vorgesehen ist.

15. Querträger nach Anspruch 2, wobei am äußeren Ende des Querträgerhauptkörpers (21), entfernt von der anderen Querträger-Einzelstruktur (2), ein Anti-Gier-Schwingungsdämpfer-Montageabschnitt zur Verbindung mit einem Anti-Gier-Dämpfer (96) vorgesehen ist.

## Revendications

1. Traverse pour un châssis de bogie, comprenant : deux structures unitaires de traverse (2) ;
dans laquelle chaque structure unitaire de traverse (2) comprend :
un corps principal de traverse (21), une surface d'extrémité intérieure du corps principal de traverse (21) faisant face à l'autre structure unitaire de traverse (2), la surface d'extrémité intérieure du corps principal de traverse (21) présentant une première zone de montage et une seconde zone de montage ; et
un bras de liaison de traverse (22) s'étendant dans une direction parallèle au corps principal de traverse (21), une extrémité du bras de liaison de traverse (22) étant fixée à la première zone de montage dans le corps principal de traverse (21), et l'autre extrémité du bras de liaison de traverse (22) étant reliée à la seconde zone de montage du corps principal de traverse (21) de l'autre structure unitaire de traverse (2) par un dispositif de liaison de traverse ;
**caractérisée en ce que**
la surface supérieure médiane du corps principal de traverse (21) est pourvue d'une interface de montage de longeron latéral pour l'assemblage avec un longeron latéral (1) du châssis de bogie.

2. Traverse selon la revendication 1, dans laquelle la largeur de l'extrémité du corps principal de traverse (21) faisant face à l'autre structure unitaire de traverse (2) est supérieure à la largeur de la partie médiane du corps principal de traverse (21), la première zone de montage et la seconde zone de montage sont respectivement situées aux deux extrémités de la surface d'extrémité intérieure du corps principal de traverse (21) le long de la direction de la largeur, et un espace est formé entre les deux bras de liaison de traverse (22) pour recevoir un pivot central de traction (6) du châssis de bogie.

3. Traverse selon la revendication 2, dans laquelle le dispositif de liaison de traverse comprend : une goupille de liaison de traverse (23) ; et
la première extrémité de la goupille de liaison de traverse (23) est reliée au bras de liaison de traverse (22), et la seconde extrémité est insérée et fixée dans un premier trou de goupille (210) ouvert dans la seconde zone de montage.

4. Traverse selon la revendication 3, dans laquelle le dispositif de liaison de traverse comprend en outre une bride de liaison de traverse (24), un joint de liaison de traverse (25) et un joint d'étanchéité de liaison de traverse (26) ;
le joint de liaison de traverse (25) présente une structure annulaire et est emmanché en force dans le premier trou de goupille (210) ;
la seconde extrémité de la goupille de liaison de traverse (23) est installée en force dans le joint de liaison de traverse (25), le joint d'étanchéité de liaison de traverse (26) est disposé au niveau de la surface de la seconde extrémité de la goupille de liaison de traverse (23) et est coaxial avec la goupille de liaison de traverse (23), le diamètre extérieur du joint d'étanchéité de liaison de traverse (26) est supérieur au diamètre intérieur du joint de liaison de traverse (25), et le diamètre intérieur du joint d'étanchéité de liaison de traverse (26) est inférieur au diamètre extérieur de la goupille de liaison de traverse (23) ;
la seconde extrémité de la goupille de liaison de traverse (23) est pourvue d'un trou fileté interne fixé par des boulons à travers le joint d'étanchéité de liaison de traverse (26) ; et
la bague intérieure de la bride de liaison de traverse (24) est insérée dans le premier trou de goupille (210) et est en appui contre l'extrémité axiale du joint de liaison de traverse (25), et la bague extérieure de la bride de liaison de traverse (24) est reliée au corps principal de traverse (21) par des boulons.

5. Traverse selon la revendication 4, dans laquelle le joint de liaison de traverse (25) comprend une coque métallique, une bague intérieure métallique et un bloc de caoutchouc disposé entre celles-ci, et le bloc de caoutchouc est vulcanisé avec la coque métallique et la bague intérieure métallique pour former une structure intégrée.

6. Traverse selon la revendication 4, dans laquelle le dispositif de liaison de traverse comprend en outre : au moins une bague de montage de traverse (27) disposée dans le premier trou de goupille (210) et située entre le joint de liaison de traverse (25) et le corps principal de traverse (21), et la goupille de liaison de traverse (23) traverse séquentiellement l'au moins une bague de montage de traverse (27) et le joint de liaison de traverse (25).

7. Traverse selon la revendication 3, dans laquelle la première extrémité de la goupille de liaison de traverse (23) est insérée dans un second trou de goupille prévu sur la surface d'extrémité du bras de liaison de traverse (22).

8. Traverse selon la revendication 2, dans laquelle la surface supérieure médiane du corps principal de traverse (21) est pourvue de deux plateformes de montage secondaires (212) en saillie par rapport à la surface supérieure du corps principal de traverse (21), et les plateformes de montage secondaires (212) sont pourvues de trous de boulons pour la liaison de dispositifs de suspension secondaires, et la zone entre les deux plateformes de montage secondaires (212) est destinée à recevoir les longerons latéraux (1).

9. Traverse selon la revendication 2, dans laquelle la surface supérieure du corps principal de traverse (21) est pourvue d'une plateforme de montage de freinage en saillie par rapport à la surface supérieure du corps principal de traverse (21), et la plateforme de montage de freinage est pourvue d'un trou de boulon pour la liaison du dispositif de freinage.

10. Traverse selon la revendication 2, dans laquelle une portion de montage d'amortisseur de vibrations verticales est prévue sur la surface latérale du corps principal de traverse (21) pour la liaison avec un amortisseur de vibrations verticales (93).

11. Châssis de bogie comprenant : une traverse selon l'une quelconque des revendications 1 à 10.

12. Véhicule ferroviaire comprenant : un châssis de bogie selon la revendication 11.

13. Traverse selon la revendication 3, dans laquelle la surface périphérique extérieure de la goupille de liaison de traverse (23) est prolongée vers l'extérieur dans la direction radiale pour former une bride de montage reliée à la bride disposée à l'extrémité du bras de liaison de traverse (22) par des boulons.

14. Traverse selon la revendication 2, dans laquelle une portion de montage de barre de torsion anti-roulis (215) est prévue sur la surface inférieure du corps principal de traverse (21) pour la liaison avec une barre de torsion anti-roulis (95).

15. Traverse selon la revendication 2, dans laquelle une portion de montage d'amortisseur de vibrations anti-lacet est prévue à l'extrémité extérieure du corps principal de traverse (21) à l'opposé de l'autre structure unitaire de traverse (2) pour la liaison avec un amortisseur anti-lacet (96).
